(19) Europäisches Patentamt / European Patent Office / Office européen des brevets

(11) **EP 4 351 055 B1**

(12) **EUROPEAN PATENT SPECIFICATION**

(45) Date of publication and mention of the grant of the patent:
**26.02.2025 Bulletin 2025/09**

(21) Application number: **22831828.3**

(22) Date of filing: **23.06.2022**

(51) International Patent Classification (IPC):
*H04L 1/18* (2023.01)  *H04W 72/04* (2023.01)
*H04L 5/00* (2006.01)  *H04L 1/1829* (2023.01)
*H04L 1/1867* (2023.01)

(52) Cooperative Patent Classification (CPC):
**H04L 1/1896; H04L 1/1854; H04L 1/1861;
H04L 5/0055; H04W 72/04**

(86) International application number:
**PCT/CN2022/100715**

(87) International publication number:
**WO 2023/274012 (05.01.2023 Gazette 2023/01)**

(54) **SIDELINK FEEDBACK INFORMATION TRANSMISSION METHOD AND COMMUNICATION APPARATUS**

VERFAHREN ZUR ÜBERTRAGUNG VON SIDELINK-FEEDBACKINFORMATIONEN UND KOMMUNIKATIONSVORRICHTUNG

PROCÉDÉ DE TRANSMISSION D'INFORMATIONS DE RÉTROACTION DE LIAISON LATÉRALE ET APPAREIL DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2021 CN 202110736163**

(43) Date of publication of application:
**10.04.2024 Bulletin 2024/15**

(73) Proprietor: Huawei Technologies Co., Ltd.
**Longgang
Shenzhen, Guangdong 518129 (CN)**

(72) Inventors:
• **DONG, Lei
  Shenzhen, Guangdong 518129 (CN)**
• **SU, Hongjia
  Shenzhen, Guangdong 518129 (CN)**
• **GUO, Wenting
  Shenzhen, Guangdong 518129 (CN)**
• **LU, Lei
  Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(56) References cited:
WO-A1-2021/029557    CA-A1- 3 150 398
CN-A- 110 545 533    CN-A- 112 118 628
CN-A- 112 398 613    CN-A- 112 671 521
US-A1- 2020 037 343    US-A1- 2021 092 783

• ZTE, SANECHIPS: "Consideration on HARQ feedback for groupcast", 3GPP DRAFT; R2-1906481 CONSIDERATION ON HARQ FEEDBACK FOR GROUPCAST, vol. RAN WG2, 3 May 2019 (2019-05-03), Reno, USA, pages 1 - 3, XP051710796

## Description

This application claims priority to Chinese Patent Application No. 202110736163.6, filed with the China National Intellectual Property Administration on June 30, 2021 and entitled "SIDELINK FEEDBACK INFORMATION TRANSMISSION METHOD AND COMMUNICATION APPARATUS".

## TECHNICAL FIELD

This application relates to the communication field, and more specifically, to a sidelink feedback information transmission method and a communication apparatus.

## BACKGROUND

In an evolution process of a wireless communication system, a spectrum has always been one of important development directions in wireless communication. In a 4G long term evolution (long term evolution, LTE) system, research on an unlicensed frequency band in cellular mobile communication promotes emergence of technologies such as LTE in unlicensed spectrum (LTE in unlicensed spectrum, LTE-U), licensed assisted access (licensed assisted access, LAA), and MulteFire (MulteFire). In addition, the 3rd generation partnership project (3rd generation partnership project, 3GPP) standardizes the LAA, so that an LTE system is capable of coexistence with a wireless communication technology (Wi-Fi) device based on a listen-before-talk (listen-before-talk, LBT) mechanism. This enables the LTE system to communicate on the unlicensed frequency band. In a new radio (new radio, NR) system, NR protocol technologies on the unlicensed frequency band are collectively referred to as NR-U.

In a communication process, user equipment (user equipment, UE) further has a PCS interface in addition to a Uu interface. The PCS interface is a communication interface between UEs, and a transmission link of the PCS interface is defined as a sidelink (sidelink, SL). Enabling SL communication on the unlicensed frequency band in local space is an important evolution direction, and corresponding protocol technologies may be collectively referred to as SL-U. Similar to the NR-U, UEs operating based on the SL-U also need to coexist with nearby Wi-Fi devices based on the LBT mechanism.

A current standard discusses convergence of communication through the Uu interface and the LBT mechanism, and does not involve convergence of communication through the PC5 interface and the LBT mechanism. How to communicate on the unlicensed frequency band through the PC5 interface based on the LBT mechanism is an urgent problem to be resolved.

Document US 20211092783 A1 relates to a wireless communication method for sharing channel occupancy time (COT) between sidelink user equipment devices (UEs). A first user equipment (UE) determines a channel occupancy time (COT) in a shared radio frequency spectrum band for transmitting a sidelink with a second UE. The first UE uses the first resource in the COT to send a sidelink to the second UE, the sidelink comprising COT sharing information for the second resource in the COT.

Document CA 3150398 A1 relates to a sidelink resource mapping method that comprises the following steps: respectively obtaining a group of physical sidelink feedback channel (PSFCH) resources corresponding to each physical sidelink transmission channel resource in a group of physical sidelink transmission channel resources, wherein the physical sidelink transmission channel resources comprise physical sidelink shared channel (PSSCH) resources and/or PSCCH resources; setting an index number for each physical sidelink transmission channel resource in the group of physical sidelink transmission channel resources according to the first preset sequence of the first resource factor; according to the second preset sequence of the second resource factor, setting the index number for the group of PSFCH resources; and configuring a mapping relationship between the index number of the physical sidelink transmission channel resource and the index number of the PSFCH resource corresponding to the physical sidelink transmission channel resource.

## SUMMARY

This application provides a sidelink feedback information transmission method and an apparatus, to reduce a possibility that a receive terminal fails to contend for a resource, and improve data transmission accuracy. The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention.

According to a first aspect, a sidelink feedback information transmission method according to claim 1 is provided. The method is performed by a first terminal, or may be performed by a chip or a circuit configured in the first terminal. This is not limited in this application. The method includes: The first terminal sends first indication information to a second terminal, where the first indication information indicates that first channel occupancy time includes a first physical sidelink feedback channel PSFCH resource; and the first terminal receives, on the first PSFCH resource, feedback information from the second terminal.

Based on the foregoing solution, after preempting, based on an LBT mechanism, the resource that corresponds to the first channel occupancy time, a data transmit end (the first terminal) indicates that the first channel occupancy time includes the first PSFCH resource to the second terminal (a data receive end). In this way, the second terminal sends the feedback information on the first PSFCH resource determined by using a predefined rule. Compared with a solution in which the second terminal contends for a resource to send the feedback information, this solution can reduce a possibility of a contention failure of the second terminal, and improve accuracy of data transmission.

Further, the first terminal receives, on the first PSFCH resource, first hybrid automatic repeat request HARQ information from the second terminal, where the first HARQ information is a feedback on first data, and the first data is data sent by the first terminal to the second terminal within second channel occupancy time. The first channel occupancy time is later than the second channel occupancy time.

Based on the foregoing solution, the first terminal may preempt, by using the LBT mechanism, the resource that corresponds to the first channel occupancy time, to transmit HARQ information that corresponds to data for which HARQ information is not previously fed back within the second channel occupancy time. In this way, the data for which HARQ information is not fed back within the second channel occupancy time can be fed back. This prevents the first terminal from retransmitting the data because the first terminal cannot receive the feedback information. This solution can save resources to some extent.

Additionally, the first terminal receives, on the first PSFCH resource, the first HARQ information and second HARQ information from the second terminal. The first HARQ information is the feedback on the first data, and the first data is the data sent by the first terminal to the second terminal within the second channel occupancy time. The second HARQ information is a feedback on second data, and the second data is data sent by the first terminal to the second terminal within the first channel occupancy time.

Based on the foregoing solution, the first terminal may preempt, by using the LBT mechanism, the resource that corresponds to the first channel occupancy time, to transmit data and feedback information. It should be understood that, in this solution, the first terminal preempts a resource to transmit data, and the first terminal may receive, on the preempted resource, the HARQ information that corresponds to the data for which the HARQ information is not previously fed back within the second channel occupancy time. This overcomes a defect that data within the second channel occupancy time in some scenarios is not fed back within the second channel occupancy time, and improves a feedback mechanism in a data transmission process.

In a possible implementation, the first terminal sends second indication information to the second terminal, where the second indication information indicates information about the first data that corresponds to the first HARQ information.

In a possible implementation, the information about the first data includes a first PSSCH source identifier and/or destination identifier.

Based on the foregoing solution, when a plurality of pieces of data sent by the first terminal to a plurality of receive terminals are not fed back, the first terminal sends, to the receive terminal, specific information of data for which HARQ information is not fed back, so that the second terminal can identify, based on the specific information, data that needs to be fed back, and accurately feed back the HARQ information.

In a possible implementation, a time domain resource of the first PSFCH resource is determined based on an index of a start time unit of the first PSFCH resource and/or a quantity of time units occupied by the first PSFCH resource.

Based on the foregoing solution, the time domain resource of the first PSFCH resource may be determined in a manner of predefinition or preconfiguration, and this manner reduces signaling overheads to some extent.

In a possible implementation, the first terminal sends third indication information to the second terminal, where the third indication information indicates the index of the start time unit of the first PSFCH resource and/or the quantity of time units occupied by the first PSFCH resource.

Based on the foregoing solution, the time domain resource of the first PSFCH resource is determined based on the indication information. This manner is more flexible than the manner of predefinition or preconfiguration.

In a possible implementation, a frequency domain resource of the first PSFCH resource is determined based on an index of a start frequency domain unit of the first PSFCH resource and/or a quantity of frequency domain units occupied by the first PSFCH resource.

Based on the foregoing solution, the frequency domain resource of the first PSFCH resource may be determined in the manner of predefinition or preconfiguration, and this manner reduces signaling overheads to some extent.

In a possible implementation, the first terminal sends fourth indication information to the second terminal, where the fourth indication information indicates the index of the start frequency domain unit of the first PSFCH resource and/or the quantity of frequency domain units occupied by the first PSFCH resource.

Based on the foregoing solution, the frequency domain resource of the first PSFCH resource is determined based on the indication information. This manner is more flexible than the manner of predefinition or preconfiguration.

In a possible implementation, the frequency domain resource of the first PSFCH resource is determined based on a time domain position of the first data within the second channel occupancy time.

In a possible implementation, the index of the start frequency domain unit of the first PSFCH resource is an index of a frequency domain unit included in a time unit in which the first PSFCH resource is located.

In a possible implementation, the index of the start frequency domain unit of the first PSFCH resource is an index of a frequency domain unit in which a PSFCH resource in a PSFCH resource set is located, and the PSFCH resource set is a set of PSFCH resources in a time unit in which the first PSFCH resource is located; and a frequency domain resource of the PSFCH resource in the PSFCH resource set is determined based on at least one of a bitmap, a start PSFCH resource of the PSFCH resource set, and a gap, where the gap is a frequency domain unit gap between neighboring PSFCH resources in the PSFCH resource set.

In a possible implementation, the bitmap, the start PSFCH resource of the PSFCH resource set, and the gap may be determined in a manner of predefinition, preconfiguration, or network device configuration.

In a possible implementation, at least one of the first indication information, the second indication information, the third indication information, and the fourth indication information is carried in sidelink control information SCI, and the SCI is transmitted within the first channel occupancy time.

According to a second aspect, a sidelink feedback information transmission method according to claim 6 is provided. The method is performed by a second terminal, or may be performed by a chip or a circuit configured in the second terminal. This is not limited in this application. The method includes: The second terminal receives first indication information from a first terminal, where the first indication information indicates that first channel occupancy time includes a first PSFCH resource; and the second terminal sends, on the first PSFCH resource, feedback information to the first terminal.

Based on the foregoing solution, after preempting, based on an LBT mechanism, the resource that corresponds to the first channel occupancy time, a data transmit end (the first terminal) indicates that the first channel occupancy time includes the first PSFCH resource to the second terminal (a data receive end). In this way, the second terminal sends the feedback information on the first PSFCH resource determined by using a predefined rule. Compared with a solution in which the second terminal contends for a resource to send the feedback information, this solution can reduce a possibility of a contention failure of the second terminal, and improve accuracy of data transmission.

Further, the second terminal sends, on the first PSFCH resource, first HARQ information to the first terminal, where the first HARQ information is a feedback on first data, and the first data is data received by the second terminal from the first terminal within second channel occupancy time. The first channel occupancy time is later than the second channel occupancy time.

Based on the foregoing solution, the first terminal may preempt, by using the LBT mechanism, the resource that corresponds to the first channel occupancy time, to transmit HARQ information that corresponds to data for which HARQ information is not previously fed back within the second channel occupancy time. In this way, the data for which HARQ information is not fed back within the second channel occupancy time can be fed back This prevents the first terminal from retransmitting the data because the first terminal cannot receive the feedback information. This solution can save resources to some extent.

Additionally, the second terminal sends, on the first PSFCH resource, the first HARQ information and second HARQ information to the first terminal. The first HARQ information is the feedback on the first data, and the first data is data received by the second terminal from the first terminal within the second channel occupancy time. The second HARQ information is a feedback on second data, and the second data is data received by the second terminal from the first terminal within the first channel occupancy time.

Based on the foregoing solution, the first terminal may preempt, by using the LBT mechanism, the resource that corresponds to the first channel occupancy time, to transmit data and feedback information. It should be understood that, in this solution, the first terminal preempts a resource to transmit data, and the second terminal may send, on the preempted resource, the HARQ information that corresponds to the data for which the HARQ information is not previously fed back within the second channel occupancy time. This overcomes a defect that data within the second channel occupancy time in some scenarios is not fed back within the second channel occupancy time, and improves a feedback mechanism in a data transmission process.

In a possible implementation, the second terminal receives second indication information from the first terminal, where the second indication information indicates information about the first data that corresponds to the first HARQ information. The second terminal sends, on the first PSFCH resource, the first HARQ information to the first terminal based on the second indication information.

In a possible implementation, the information about the first data includes a PSSCH source identifier and/or destination identifier. The second terminal determines the first data based on the PSSCH source identifier and/or destination identifier, and sends, on the first PSFCH resource, the first HARQ information that corresponds to the first data to the first terminal.

Based on the foregoing solution, when a plurality of pieces of data sent by the first terminal to a plurality of receive terminals are not fed back, the first terminal sends, to the receive terminal, specific information of data for which HARQ information is not fed back, so that the second terminal can identify, based on the specific information, data that needs to be fed back, and accurately feed back the HARQ information.

In a possible implementation, a time domain resource of the first PSFCH resource is determined based on an index of a start time unit of the first PSFCH resource and/or a quantity of time units occupied by the first PSFCH resource.

Based on the foregoing solution, the time domain resource of the first PSFCH resource may be determined in a manner of predefinition or preconfiguration, and this manner reduces signaling overheads to some extent.

In a possible implementation, the second terminal receives third indication information from the first terminal, where the third indication information indicates the index of the start time unit of the first PSFCH resource and/or the quantity of time units occupied by the first PSFCH resource.

Based on the foregoing solution, the time domain resource of the first PSFCH resource is determined based on the indication information. This manner is more flexible than the manner of predefinition or preconfiguration.

In a possible implementation, a frequency domain resource of the first PSFCH resource is determined based on an index of a start frequency domain unit of the first PSFCH resource and/or a quantity of frequency domain units occupied by the first PSFCH resource.

Based on the foregoing solution, the frequency domain resource of the first PSFCH resource may be determined in the manner of predefinition or preconfiguration, and this manner reduces signaling overheads to some extent.

In a possible implementation, the second terminal receives fourth indication information from the first terminal, where the fourth indication information indicates the index of the start frequency domain unit of the first PSFCH resource and/or the quantity of frequency domain units occupied by the first PSFCH resource.

Based on the foregoing solution, the frequency domain resource of the first PSFCH resource is determined based on the indication information. This manner is more flexible than the manner of predefinition or preconfiguration.

In a possible implementation, the frequency domain resource of the first PSFCH resource is determined based on a time domain position of the first data within the second channel occupancy time.

In a possible implementation, the index of the start frequency domain unit of the first PSFCH resource is an index of a frequency domain unit included in a time unit in which the first PSFCH resource is located.

In a possible implementation, the index of the start frequency domain unit of the first PSFCH resource is an index of a frequency domain unit in which a PSFCH resource in a PSFCH resource set is located, and the PSFCH resource set is a set of PSFCH resources in a time unit in which the first PSFCH resource is located; and a frequency domain resource of the PSFCH resource in the PSFCH resource set is determined based on at least one of a bitmap, a start PSFCH resource of the PSFCH resource set, and a gap, where the gap is a frequency domain unit gap between neighboring PSFCH resources in the PSFCH resource set.

In a possible implementation, the bitmap, the start PSFCH resource of the PSFCH resource set, and the gap may be determined in a manner of predefinition, preconfiguration, or network device configuration.

In a possible implementation, at least one of the first indication information, the second indication information, the third indication information, and the fourth indication information is carried in SCI, and the SCI is transmitted within the first channel occupancy time.

According to a fifth aspect, a communication apparatus according to claim 11 is provided. The apparatus is the first terminal in the first aspect, an electronic device configured in the first terminal, or a large device that includes the first terminal. The apparatus is configured to perform the method provided in the first aspect. The apparatus includes a transceiver.

The apparatus further includes a processor. The processor is coupled to a memory, and is configured to execute instructions in the memory, to implement the method in any one of the first aspect or possible implementations of the first aspect. The apparatus further includes a memory. The memory and the processor may be separately deployed, or may be centrally deployed. Optionally, the apparatus further includes a communication interface, and the processor is coupled to the communication interface.

In an implementation, the communication interface may be a transceiver or an input/output interface.

In another implementation, the apparatus is a chip configured in the first terminal. When the apparatus is the chip configured in the first terminal, the communication interface may be an input/output interface, an interface circuit, an output circuit, an input circuit, a pin, a related circuit, or the like on the chip or a chip system. The processor may also be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a flip-flop, any logic circuit, and the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, a communication apparatus according to claim 12 is provided. The apparatus is the second terminal in the second aspect. The apparatus is configured to perform the method provided in the second aspect. The apparatus includes a transceiver.

The apparatus further includes a processor. The processor is coupled to the memory, and is configured to execute instructions in the memory, to implement the method in any one of the second aspect or the possible implementations of the second aspect. The communication apparatus further includes a memory. The memory and the processor may be separately deployed, or may be centrally deployed. Optionally, the apparatus further includes a communication interface, and the processor is coupled to the communication interface.

In an implementation, the communication interface may be a transceiver or an input/output interface.

In another implementation, the apparatus is a chip configured in the second terminal. When the apparatus is the chip configured in the second terminal, the communication interface may be an input/output interface, an interface circuit, an output circuit, an input circuit, a pin, a related circuit, or the like on the chip or a chip system. The processor may also be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a flip-flop, any logic circuit, and the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a computer-readable storage medium is provided. The computer-readable storage medium stores a computer program (which may also be referred to as code or instructions). When the computer program is run on a computer, the computer is enabled to perform the method in any one of the first aspect or the second aspect and the possible implementations of the first aspect or the second aspect.

## BRIEF DESCRIPTION OF DRAWINGS

FIG. 1(a) to FIG. 1(c) are schematic diagrams of a communication system 100 to which an embodiment of this application is applicable;

FIG. 2 is a schematic diagram of LBT behavior of an FBE device according to this application;

FIG. 3 is a schematic diagram in which a receive terminal supports feeding back information on a PSFCH according to this application;

FIG. 4 is a schematic diagram of a PSFCH resource configuration in time domain according to this application;

FIG. 5 is a schematic diagram of a PSFCH resource configuration in frequency domain according to this application;

FIG. 6 is a schematic diagram of resource multiplexing in a code division manner according to this application;

FIG. 7 is a schematic flowchart of a sidelink feedback information transmission method according to an embodiment of this application;

FIG. 8 is a schematic diagram of a time domain position in sidelink feedback information transmission according to an embodiment of this application;

FIG. 9 is a schematic diagram of a time domain position of a PSFCH resource according to an embodiment of this application;

FIG. 10 is a schematic diagram of a frequency domain position obtained by a first terminal according to an embodiment of this application;

FIG. 11 is a schematic diagram of a frequency domain position of a PSFCH resource according to an embodiment of this application;

FIG. 12 is a schematic diagram of simultaneously transmitting data and HARQ information within COT 1 according to an embodiment of this application;

FIG. 13 is a schematic diagram of a frequency domain position of a PSFCH resource within COT 1 according to an embodiment of this application;

FIG. 14 is a schematic block diagram of a first terminal according to an embodiment of this application;

FIG. 15 is a schematic block diagram of a second terminal according to an embodiment of this application; and

FIG. 16 is a schematic diagram of a structure of a terminal device according to an embodiment of this application.

## DESCRIPTION OF EMBODIMENTS

The following describes the technical solutions in this application with reference to the accompanying drawings.

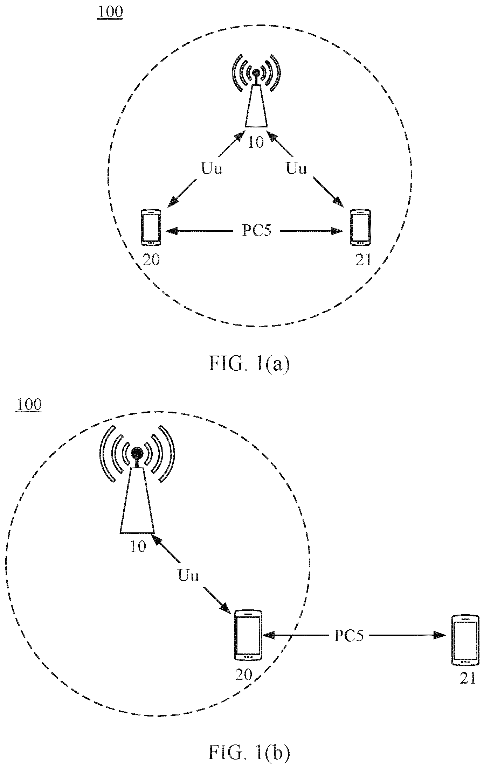

FIG. 1(a) to FIG. 1(c) are schematic diagrams of a communication system 100 according to an embodiment of this application.

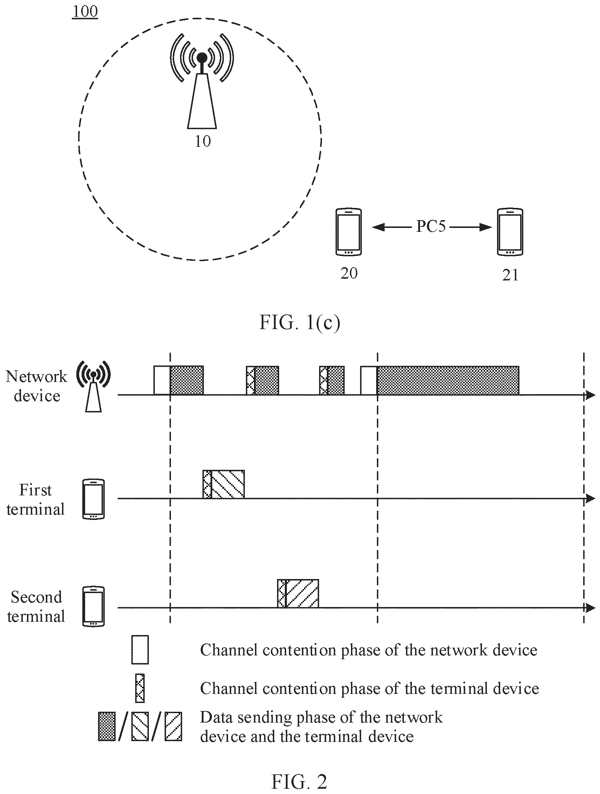

The communication system 100 shown in FIG. 1(a) includes a network device 10, a terminal device 20, and a terminal device 21. Both the terminal device 20 and the terminal device 21 are within coverage of the network device 10. The network device 10 and the terminal device communicate with each other through a Uu air interface. The terminal devices 20 and 21 communicate with each other through a PC5 interface. The communication system 100 shown in FIG. 1(b) includes a network device 10, a terminal device 20, and a terminal device 21. The terminal device 20 is within coverage of the network device 10, and the terminal device 21 is outside the coverage of the network device 10. The communication system 100 shown in FIG. 1(c) includes a network device 10, a terminal device 20, and a terminal device 21. Neither the terminal device 20 nor the terminal device 21 is within coverage of the network device 10.

It should be understood that quantities of terminal devices and network devices shown in FIG. 1(a) to FIG. 1(c) are merely examples, and quantities of terminal devices and network devices in a communication system are not limited in this application.

The technical solutions in embodiments of this application may be applied to various communication systems, for example, a global system for mobile communications (global system for mobile communications, GSM), a code division multiple access (code division multiple access, CDMA) system, and a wideband code division multiple access (wideband code division multiple access, WCDMA) system, a general packet radio service (general packet radio service, GPRS), an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or a future evolved communication system, vehicle-to-X (vehicle-to-X, V2X), long term evolution-vehicle (long term evolution-vehicle, LTE-V), Internet of vehicles, machine type communication (machine type communication, MTC), Internet of things (Internet of things, IoT), long term evolution-machine (long term evolution-machine, LTE-M), machine-to-machine (machine-to-machine, M2M), and device-to-device (device to device, D2D), where the V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like.

The network device in embodiments of this application may be any device with a wireless transceiver function. The device includes but is not limited to: an evolved NodeB (evolved NodeB, eNB), a radio network controller (radio network controller, RNC), a NodeB (NodeB, NB), a radio network controller (radio network controller, RNC), a base station controller (base station controller, BSC), a base transceiver station (base transceiver station, BTS), a home base station, (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the device may be a gNB or a transmission point (TRP or TP) in a 5G system like an NR system, may be an antenna panel or a group of antenna panels (including a plurality of antenna panels) of a base station in a 5G system, or may be a network node, such as a baseband unit (baseband unit, BBU) or a distributed unit (distributed unit, DU), that constitutes a gNB or a transmission point.

For example, the network device may be a conventional macro base station in a conventional universal mobile telecommunications system (universal mobile telecommunications system, UMTS)/LTE wireless communication system, may be a micro base station in a heterogeneous network (heterogeneous network, HetNet) scenario, may be a BBU and a remote radio unit (remote radio unit, RRU) in a distributed base station scenario, and may be a baseband unit pool (BBU pool) and an RRU in a cloud radio access network (cloud radio access network, CRAN) scenario.

In some deployments, the network device may include a central unit (central unit, CU) and a DU, or may include an access network (radio access network, RAN) device including a CU node and a DU node. For example, in the LTE system, a RAN device that includes a CU node and a DU node splits a protocol layer of the eNB in the LTE system, some protocol layer functions are centrally controlled by the CU, and some or all of remaining protocol layer functions are distributed in the DU. The CU centrally controls the DU. The gNB may further include an active antenna unit (active antenna unit, AAU for short). For example, in the 5G system, the CU implements some functions of the gNB, and the DU implements some functions of the gNB. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU performs some processing functions of the physical layer, radio frequency processing, and functions related to an active antenna. Because information at the RRC layer is finally changed into information at the PHY layer, or is changed from information at the PHY layer, in this architecture, a higher layer signaling like an RRC layer signaling may also be considered to be sent by the DU, or sent by the DU and the AAU. It may be understood that the network device may be a device including one or more of a CU node, a DU node, and an AAU node. In addition, the CU may be classified as a network device in the RAN, or the CU may be classified as a network device in a core network (core network, CN). This is not limited in this application.

The terminal device in embodiments of this application may be user equipment, an access terminal, a subscriber unit, a subscriber station, a mobile station, a mobile console, a remote station, a remote terminal, a mobile device, a user terminal, a wireless communication device, a user agent, or a user apparatus. The terminal in embodiments of this application may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, vehicle user equipment (vehicle user equipment, VUE), an in-vehicle device, an in-vehicle communication module, another embedded communication module, a terminal in a 5G network, a terminal in a future evolved network, or the like.

The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In addition, the terminal device may alternatively be a terminal device in an Internet of Things (Internet of things, IoT) system. The IoT is an important part in development of future information technologies. A main technical feature of the IoT is to connect things to a network by using a communication technology, to implement an intelligent network for human-machine interconnection and thing-thing interconnection. A specific form of the terminal device is not limited in this application.

It should be understood that, in embodiments of this application, the terminal device may be an apparatus configured to implement a function of the terminal device, or may be an apparatus that can support the terminal device in implementing the function, for example, a chip system. The apparatus may be installed in a terminal. In embodiments of this application, the chip system may include a chip, or may include a chip and another discrete component.

In an evolution process of a wireless communication system, research on an unlicensed frequency band is gradually started. For example, technologies such as LTE-U, LAA, and MulteFire emerge. The 3GPP organization standardizes the LAA, and successively develops enhanced licensed assisted access (enhanced licensed assisted access, eLAA) and further enhanced licensed assisted access (further enhanced licensed assisted access, feLAA) technologies. This enables the LTE system to coexist with Wi-Fi devices based on an LBT mechanism, and enables LTE Uu interface communication on an unlicensed frequency band. In a 5G NR system, NR protocol technologies on the unlicensed frequency band are collectively referred to as NR-U. To improve communication performance of a Uu interface that corresponds to the NR-U, the 3GPP organization discusses a method for integrating a frame structure of the Uu interface with the LBT mechanism.

Correspondingly, enabling SL communication on the unlicensed frequency band in local space is also an important evolution direction, and corresponding protocol technologies may be collectively referred to as SL-U. Similar to the Uu interface, terminals operating based on the SL-U also need to coexist with nearby Wi-Fi devices based on the LBT mechanism.

The LBT mechanism is a random back-off (random back-off)-based channel access rule. To be specific, before accessing a channel and starting to send data, a terminal needs to listen to whether the channel is idle (idle). If it is listened that the channel has been idle for a specific period of time, the terminal may occupy the channel. If it is listened that the channel is not idle, the terminal may occupy the channel after the channel becomes idle. The LBT mechanism is a mandatory feature for using unlicensed frequency bands, because each region in the world has regulations (regulations) on using the unlicensed frequency bands. Terminals in various forms that operate in different communication protocols can use the unlicensed frequency bands provided that the terminals meet the regulations, thereby using spectrum resources fairly and efficiently. To comply with the regulations, the 3GPP organization classifies LBT mechanisms in the NR system into the following four types:

Category 1 LBT (category 1 LBT): After obtaining channel occupancy time (channel occupancy time, COT), a communication device immediately sends data after a short switching gap (switching gap) occurs in a receiving state. This is referred to as Cat 1 LBT for short. The COT refers to duration for which the communication device is allowed to occupy a channel after successfully accessing the channel. Duration for the switching gap cannot be greater than 16 μs.

Category 2 LBT (category 2 LBT): An LBT mechanism without random back-off is referred to as Cat 2 LBT for short. To be specific, after a communication device listens that a channel is in an idle state for a specific period of time, the communication device may send data without performing random back-off.

Category 3 LBT (category 3 LBT): A random back-off LBT mechanism with a contention window (contention window) of a fixed size is referred to as Cat 3 LBT for short. To be specific, a communication device generates a random number N based on the contention window of the fixed size. In addition, data may be sent after it is listened that a channel is in an idle state for a period of time that is determined based on the random number N. The size of the contention window is related to a minimum value and a maximum value of N.

Category 4 LBT (category 4 LBT): A random back-off LBT mechanism with a contention window of a variable size is referred to as Cat 4 LBT for short. To be specific, a communication device generates a random number N based on the contention window of the variable size. In addition, data may be sent after it is listened that a channel is in an idle state for a period of time that is determined based on the random number N. The size of the contention window is related to a minimum value and a maximum value of N, and the communication device may change the size of the contention window.

The following describes that in the NR-U protocol, an NR-U device complies with the 3GPP protocol, and uses the LBT mechanism as a channel access method. The NR-U device may use the following types of the LBT mechanisms:

Category 1: A Cat 1 LBT mechanism, and a switching gap does not exceed 16 μs. In such an LBT mechanism, the NR-U device does not need to listen to a channel, and may directly send data after a switching gap of at most 16 μs in a receiving state within COT.

Category 2: A Cat 2 LBT mechanism. An NR-U device can access a channel and send data after listening that the channel is in an idle state for 16 μs.

Category 3: A Cat 2 LBT mechanism. An NR-U device can access a channel and send data after listening that the channel is in an idle state for 25 μs.

Category 4: A Cat 4 LBT mechanism. An NR-U device can access a channel and send data after performing random backoff by using a contention window of a variable size.

When the NR-U device coexists with a Wi-Fi device, equipment that executes the LBT mechanism is classified into load based equipment (load based equipment, LBE) and frame based equipment (frame based equipment, FBE) in terms of an equipment type. In the preceding information:

The LBE can perform channel listening and contention access at any time point without considering a frame boundary.

The FBE allows COT to be obtained only on a frame boundary synchronized in a system through channel contention access. Herein, "frame" represents a fixed frame period (fixed frame period, FFP), and a specific period value is configured by using RRC signaling. For example, the period value may be 1 ms, 2 ms, 2.5 ms, 4 ms, 5 ms, and 10 ms, which may be exactly divided by duration (20 ms) of two radio frames.

FIG. 2 is a schematic diagram of LBT behavior of an FBE device according to this application. A network device may be a gNB. The gNB obtains COT through channel contention access before each FFP, and sends downlink (downlink, DL) data within the COT. A first terminal and a second terminal separately communicate with the gNB. The first terminal and the second terminal do not need to obtain the COT, but send uplink (uplink, UL) data to the gNB through channel contention within the COT obtained by the gNB.

The following describes a resource allocation mode and a data transmission mode of an SL in an NR system.

SL resource allocation modes:

Mode 1: A base station resource allocation mode, which is mainly applied to SL communication in a case of network coverage. The base station centrally allocates resources based on a reported status of a buffer state report (buffer state report, BSR) of a terminal. Resource allocation may be in a dynamic mode or a preconfiguration mode, and resources allocated by the base station include an initial resource and/or a retransmission resource.

Mode 2: User-selection resource mode. A transmission resource of a transmit terminal does not depend on a base station, and the terminal selects a transmission resource for communication. This mode is not limited by network coverage. When there is no network coverage, the transmit terminal may also perform communication by using this mode. A user-selected resource includes an initial resource and/or a retransmission resource. In mode 2, the terminal prevents selected resources from colliding with each other through sensing. Specifically, the terminal device performs sensing in a sensing window (sensing window), by parsing sidelink control information (sidelink control information, SCI), measuring reference signal received power (reference signal received power, RSRP), and the like from another terminal device. Further, the terminal device excludes, in a selection window (selection window) based on a sensing result, a reserved (reserved) resource or a resource that may be reserved, and selects a resource for transmission.

SL data transmission modes:

For example, a sidelink hybrid automatic repeat request (hybrid automatic repeat request, HARQ) retransmission solution is proposed in NR-V2X. Specifically, a receive terminal feeds back HARQ information to the transmit terminal based on a decoding status of data. For example, when the receive terminal correctly decodes data transmitted on a physical sidelink shared channel (physical sidelink shared channel, PSSCH), an ACK is fed back. When a receive end cannot correctly decode the data transmitted on the PSSCH, a NACK is fed back. Whether the receive terminal supports feeding back information on the physical sidelink feedback channel (physical sidelink feedback channel, PSFCH) depends on a configuration of a resource pool and a HARQ feedback enabled/disabled indicator field in sidelink control information (sidelink control information, SCI). The transmit terminal may reserve a retransmission resource by using a frequency domain resource allocation field "Frequency resource assignment" and a time domain resource allocation field "Time resource assignment" in the SCI.

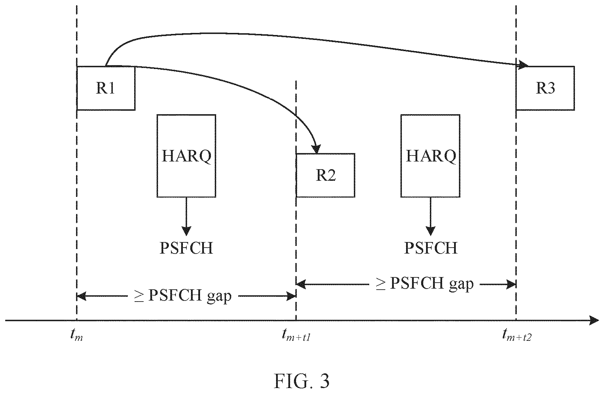

FIG. 3 is a schematic diagram in which a receive terminal supports feeding back information on a PSFCH according to this application. R1, R2, and R3 are data sent by the transmit terminal to the receive terminal at $t_m$, $t_{m+t1}$, and $t_{m+t2}$, and HARQ information between the R1 and the R2 is used to feed back a decoding status of the data R1. HARQ information between the R2 and the R3 is used to feed back a decoding status of the data R2. The HARQ information is carried on the PSFCH. Time domain distances between the R1 and the R2 and between the R2 and the R3 need to be greater than minimum processing time (or a PSFCH gap) required for the PSFCH.

A PSFCH resource is determined based on a time-frequency resource occupied by a PSSCH and/or a physical sidelink control channel (physical sidelink control channel, PSCCH) and a higher layer parameter. Higher layer parameters include a PSFCH period (periodPSFCHresource), a minimum gap between a PSSCH resource and the PSFCH resource (MinTimeGapPSFCH), a PSFCH RB resource (sl-PSFCH-RB-Set-r16) configured in a resource pool, and a quantity of subchannels included in the resource pool (numSubchannel).

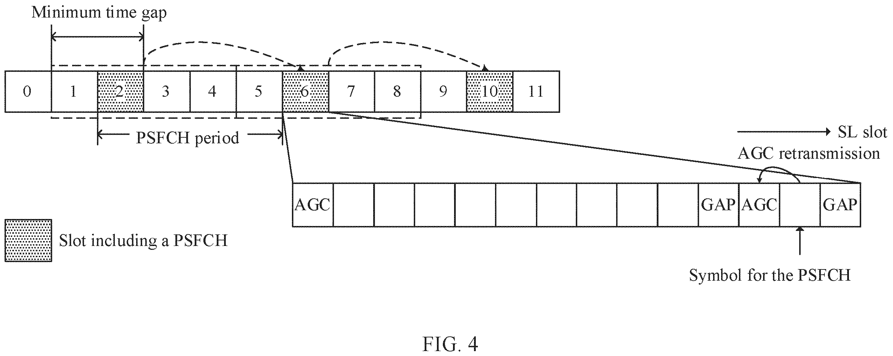

FIG. 4 is a schematic diagram of a PSFCH resource configuration in time domain according to this application. The PSFCH period is a time gap between adjacent PSFCH resources. In FIG. 4, the PSFCH period is four slots, and the minimum gap between the PSSCH and the PSFCH is two slots. To be specific, data transmitted in slots 1 to 4 feeds back information in a PSFCH resource in a slot 6, and data transmitted in slots 5 to 8 feeds back information in a PSFCH resource in a slot 10. Specifically, for example, a penultimate symbol of each slot that carries a PSFCH is used for feedback information transmission. Automatic gain control (automatic gain control, AGC) is used to adjust a receive power, and a gap (gap) is used to switch between receiving and sending. The AGC and the gap each occupy one symbol.

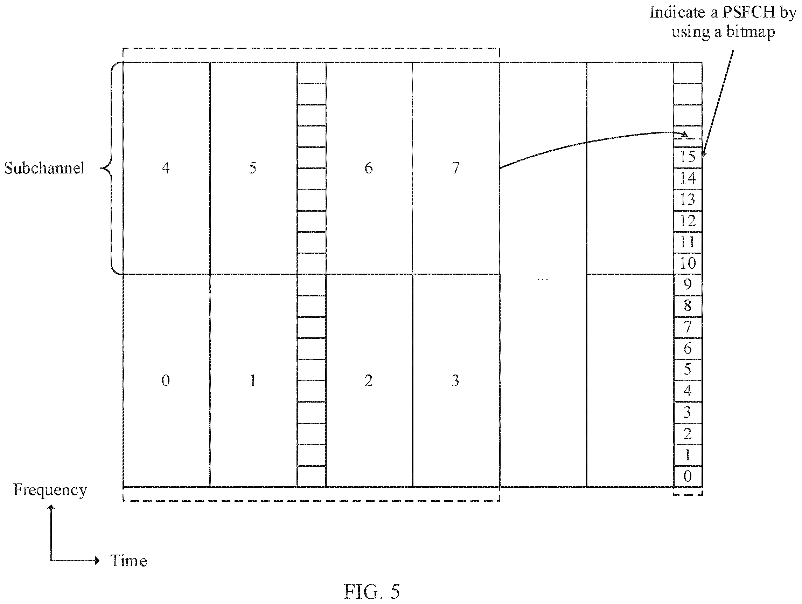

FIG. 5 is a schematic diagram of a PSFCH resource configuration in frequency domain according to this application. As shown in FIG. 5, if a quantity numSubchannel of subchannels included in a resource pool is equal to 2, and one subchannel includes 10 RBs, a symbol on which the PSFCH is located includes 20 RBs in total. A PSFCH RB resource configured in a resource pool is indicated by using a higher layer parameter sl-PSFCH-RB-Set-r16, and a specific indication mode of sl-PSFCH-RB-Set-r16 may be in a bitmap (bitmap). For example, sl-PSFCH-RB-Set-r16 is a bitmap 1111111111111110000 including 20 bits. A quantity NF of PSFCH RBs is equal to 16, corresponding to a $1^{st}$ RB to a $16^{th}$ RB in the foregoing 20 RBs.

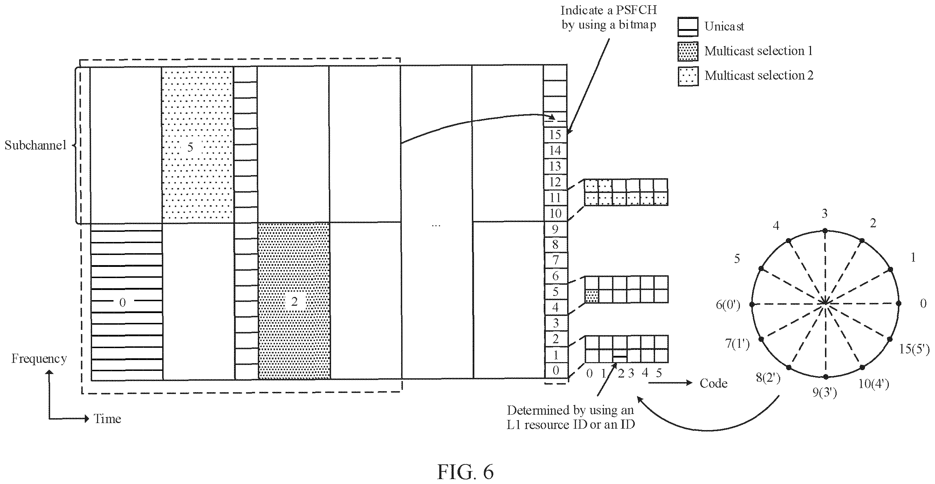

FIG. 6 is a schematic diagram of resource multiplexing in a code division manner according to this application. When a plurality of receive terminals need to send feedback information on a same PSFCH resource, the code division manner may be used. A specific sequence is determined by an identifier (identifier, ID) of a transmit terminal and an ID of the receive terminal. For example, as shown in FIG. 6, a quantity NF of PSFCH RBs indicated by sl-PSFCH-RB-Set-r16 is equal to 16, a quantity numSubchannel of subchannels included in a resource pool is equal to 2, and a PSFCH period is equal to 4. A quantity of RBs occupied by a PSFCH that corresponds to a subchannel is 2, that is, 16/(2*4)=2. PSFCH resources 0 and 1 correspond to a PSSCH0 resource, PSFCH resources 4 and 5 correspond to a PSSCH2 resource, PSFCH resources 10 and 11 correspond to a PSSCH5 resource, and a plurality of receive terminals send feedback information on the PSSCH5 resource. In this case, the code division manner needs to be used. A plurality of sequences carried in the PSSCH5 resource are determined by the ID of the transmit terminal and the ID of the receive terminal. A maximum quantity of cyclic shift pairs (numMaxCSPair) shown in FIG. 6 is 6.

When the PSFCH resource is determined based on the time-frequency resource and the higher parameter occupied by the PSSCH and/or the PSCCH for transmission, because the higher layer parameter is preconfigured in the resource pool, after the configured higher layer parameter is determined, a position of the PSFCH resource is also determined. However, when the SL is transmitted on an unlicensed spectrum, all transmission resources, including the PSFCH resource, need to be obtained by using an LBT contention access mechanism. Therefore, a fixed PSFCH configuration manner no longer matches a requirement of using the unlicensed spectrum for transmission.

In a possible implementation, after the transmit terminal successfully contends for access to a channel, a time domain position, a frequency domain position, or a code domain sequence of the PSFCH resource may be determined within the COT in an indication manner, a configuration manner, or the like. However, considering that data transmitted on the PSSCH requires decoding time, and feedback on the PSFCH also requires preparation time, that data transmitted on a PSSCH that is close to an end of the COT cannot be fed back within the COT may be caused by such a processing delay may.

This application provides a sidelink information feedback method, so that the transmit terminal can feed back HARQ information that is not previously fed back, and the transmit terminal can support contention for the PSFCH resource for one or more receive terminals. Therefore, a possibility of a contention failure caused by the one or more receive terminals contending for the PSFCH resource is reduced, and accuracy of data transmission can be further improved.

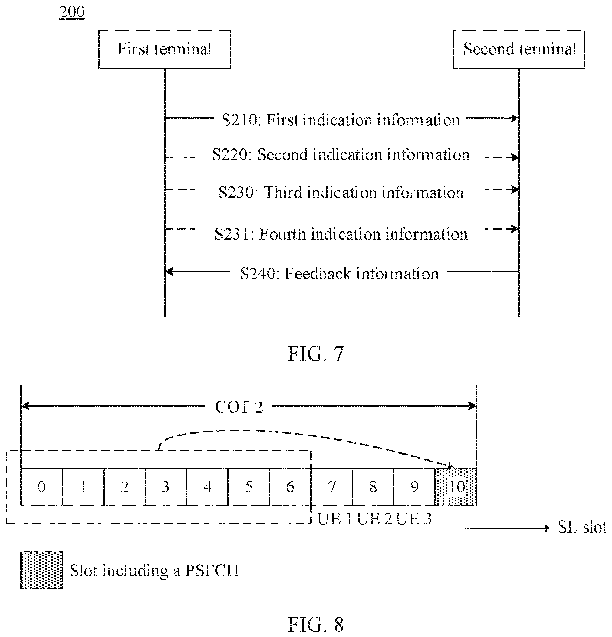

FIG. 7 is a schematic flowchart of a sidelink feedback information transmission method according to an embodiment of this application. As shown in FIG. 7, a method 200 may include the following steps.

Step 210: A first terminal sends first indication information to a second terminal, where the first indication information indicates that first channel occupancy time includes a first PSFCH resource. Correspondingly, the second terminal receives the first indication information.

Optionally, before that, after successfully contending for a channel, the first terminal obtains second channel occupancy time COT 2.

For example, FIG. 8 is a schematic diagram of a time domain position in sidelink feedback information transmission according to an embodiment of this application. As shown in FIG. 8, the COT 2 includes ten slots, and the first terminal may transmit data to different receive terminals in the ten slots. It is assumed that HARQ information that corresponds to first seven slots may be fed back within the COT 2. In addition, a PSFCH resource that carries the HARQ information may be located in a last slot within the COT 2. Data transmitted in slots 7, 8, and 9 that are close to an end of the COT 2 respectively correspond to a receive end UE-1, a receive end UE-2, and a receive end UE-3. In this case, due to factors such as a decoding processing delay of information in a PSCCH and/or a PSSCH, the receive end UE-1, the receive end UE-2, and the receive end UE-3 cannot feed back HARQ information of the data that is transmitted in slots 7, 8, and 9 on a PSFCH resource of a last slot within the COT 2. In this case, the first terminal needs to additionally contend for a channel by using an LBT mechanism, to obtain a resource, to indicate the resource to the data receive terminal, so that the data receive terminal feeds back the HARQ information of the data transmitted in the foregoing slots 7, 8, and 9. In other words, the first terminal successfully obtains first channel occupancy time COT 1 by using the LBT mechanism, where a resource that corresponds to the COT 1 includes the first PSFCH resource, and is indicated to the receive terminal by using the first indication information.

In a possible implementation, the first indication information sent by the first terminal to the second terminal includes an identifier field, and the identifier field indicates that the resource that corresponds to the COT 1 includes the first PSFCH resource.

For example, the identifier field may be a reserved field or another field in sidelink control information (sidelink control information, SCI), where the reserved field may be located in first-level SCI, and the another field may be located in second-level SCI. The second terminal may identify, by using the identifier field, that the resource that corresponds to the COT 1 indicated in current SCI includes the first PSFCH resource. For example, the identifier field may be 1 bit, and the 1 bit indicates whether the resource that corresponds to the COT 1 includes the first PSFCH resource. When the bit is 0, it indicates that the resource that corresponds to the COT 1 includes the first PSFCH resource, and when the bit is 1, it indicates that the resource that corresponds to the COT 1 does not include the first PSFCH resource. Alternatively, when the bit is 1, it indicates that the resource that corresponds to the COT 1 includes the first PSFCH resource, and when the bit is 0, it indicates that the resource that corresponds to the COT 1 does not include the first PSFCH resource. This is not limited in this application.

Step 240: The second terminal sends, on the first PSFCH resource, feedback information to the first terminal. Correspondingly, the first terminal receives the feedback information.

Further, the second terminal sends, on the resource that corresponds to the first channel occupancy time, first HARQ information to the first terminal, where the first HARQ information is a feedback on first data, and the first data is data received by the second terminal from the first terminal within the second channel occupancy time. The first channel occupancy time is later than the second channel occupancy time.

Optionally, the method 200 further includes:
Step 220: The first terminal sends second indication information to the second terminal, where the second indication information indicates information about the first data that corresponds to the first HARQ information. Correspondingly, the second terminal receives the second indication information.

For example, the second indication information includes a PSSCH source identifier (PSFCH Source ID) and/or destination identifier (PSFCH Destination ID), and the PSSCH source identifier and destination identifier may be used to determine the first data that corresponds to the first HARQ information.

In a possible implementation, after receiving the second indication information, the second terminal determines the first data based on the PSSCH source identifier and destination identifier that are indicated by the second indication information, and sends, on the first PSFCH resource, the first HARQ information to the first terminal.

For example, after receiving the second indication information, the second terminal determines, by identifying the PSSCH source identifier and/or destination identifier, which data that is transmitted within the second channel occupancy time needs to be fed back. It is assumed that the second terminal determines, by identifying the PSSCH source identifier and/or the destination identifier, that the first data needs to be fed back, and then the second terminal sends, on the first PSFCH resource, the first HARQ information to the first terminal. Reasons why the first data needs to be fed back may include the following: the second terminal determines that the first HARQ information is not fed back on the first data within the second channel occupancy time, or the first terminal does not receive the first HARQ information that is fed back by the second terminal on the first data within the second channel occupancy time. Alternatively, there may be another factor that causes the second terminal to feed back the first HARQ information within the first channel occupancy time.

Specifically, for the transmit terminal (the first terminal), all PSSCH source identifiers and/or destination identifiers that correspond to three transmissions in the slots 7, 8, and 9 shown in FIG. 8 need to be indicated in the second indication information. In this way, the receive ends UE-1, UE-2, and UE-3 that corresponds to slots 7, 8, and 9 may determine, based on the PSSCH source identifier and/or destination identifier, whether the HARQ information needs to be fed back, and determine which data needs to be fed back. After determining the data that needs to be fed back, the receive terminal (the second terminal) sends, on the first PSFCH resource, the first HARQ information to the first terminal to perform feedback.

Optionally, the second indication information indicates a quantity of HARQ processes and/or a new data indication of the PSSCH, and the quantity of HARQ processes and/or the new data indication may be used to determine the first data that corresponds to the first HARQ information. For example, the quantity of HARQ processes and/or the new data indication may be indicated by using "PSFCH HARQ process number" and "PSFCH New data indicator" in the second-level SCI. It should be noted that the fields "PSFCH Source ID" and the "PSFCH Destination ID" are dedicated for indicating the first data that corresponds to the first HARQ information, and are different from fields "HARQ process number" and "New data indicator" indicated by the second-level SCI in the prior art. The fields "HARQ process number" and "New data indicator" in the prior art indicate a PSSCH that corresponds to a current SCI. The second terminal parses the fields "PSFCH HARQ process number" and "PSFCH New data indicator", and compares with the "HARQ process number" and the "New data indicator" that corresponds to the PSSCH and that are previously received within the second channel occupancy time. If the fields "PSFCH HARQ process number" and "PSFCH New data indicator" are the same as fields " HARQ process number" and " New data indicator" that correspond to a previously received PSSCH, in this case, it may be determined that data carried on the PSSCH within the second channel occupancy time needs to be fed back.

It should be understood that the transmit terminal refers to a data transmit end, a receive end of feedback information (HARQ information), and namely, the first terminal in this application. The receive terminal refers to a data receive end, a transmit end of feedback information (HARQ information), and namely, the second terminal in this application. The following descriptions are similar.

It should be further understood that the first terminal in this application may send data to one or more receive terminals, and the second terminal in embodiments of this application is one of the receive terminals.

Optionally, before sending the first HARQ information, the second terminal further needs to determine specific resource information of the PSFCH resource, where the resource information includes a time domain resource, a frequency domain resource, and a code domain resource. Specifically, it may be determined in the following manners.

In one manner, the time domain resource, the frequency domain resource, and the code domain resource occupied by the PSFCH resource are predefined, or are preconfigured values, or are configured by a network device.

In another manner, the first terminal sends the indication information to the second terminal to indicate the time domain resource, the frequency domain resource, and the code domain resource that are occupied by the PSFCH resource.

The following separately describes a method for determining the time domain resource, the frequency domain resource, and the code domain resource occupied by the PSFCH resource.

1. PSFCH time domain resource

A time domain resource of the first PSFCH resource is determined based on an index of a start time unit of the first PSFCH resource and/or a quantity of time units occupied by the first PSFCH resource.

In a possible implementation, the index of the start time unit of the first PSFCH resource and/or the quantity of time units occupied by the first PSFCH resource may be determined based on predefinition, value preconfiguration, or network device configuration.

For example, the predefinition or the value preconfiguration is preconfigured at both of the transmit terminal or the receive terminal, and the network device configuration may carry resource configuration information in downlink control information (downlink control information, DCI), radio resource control (radio resource control, RRC) signaling, or a system information block (system information block, SIB), to indicate the index of the start time unit of the first PSFCH resource and/or the quantity of time units occupied by the first PSFCH resource.

In another possible implementation, optionally, the method 200 includes step 230: The first terminal sends third indication information to the second terminal, where the third indication information indicates the index of the start time unit of the first PSFCH resource and/or the quantity of time units occupied by the first PSFCH resource. Correspondingly, the second terminal receives the third indication information.

For example, in the foregoing two possible implementations, a time unit (the time unit may be a slot or a symbol) occupied by the PSFCH resource within the COT 1 may be last 1 to N symbols in a slot in which the first indication information is located. Alternatively, the time unit occupied by the PSFCH resource within the COT 1 is a slot after a slot in which the first indication information is located. Specifically, a specific time domain position of the PSFCH may be determined by using an index of a start slot or symbol of the PSFCH resource within the COT 1 and/or a quantity of slots or symbols occupied by the PSFCH resource.

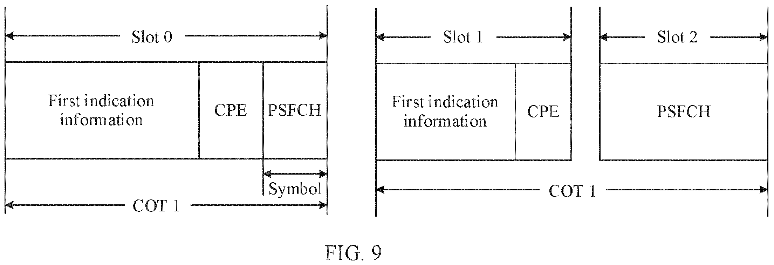

FIG. 9 is a schematic diagram of a time domain position of a PSFCH resource according to an embodiment of this application.

As shown in FIG. 9, the PSFCH resource and the first indication information are in a same slot, and are located in a last symbol of the slot. Alternatively, the PSFCH resource and the first indication information are located in adjacent slots. In this case, the PSFCH resource may occupy all or some symbols of the slot. A time domain symbol between the first indication information and the PSFCH resource may be used to send cyclic prefix extension (cyclic prefix extension, CPE), and content of the CPE is replication of the first indication information, to occupy a channel. When an unlicensed spectrum is used, if the channel is idle for a specific period of time, the channel is preempted by another device.

It should be understood that the foregoing schematic diagram in FIG. 9 of the time domain position of the PSFCH resource and the first indication information is merely an example. This is not limited in this application.

In still another possible implementation, the index of the start time unit of the first PSFCH resource or the quantity of time units occupied by the first PSFCH resource may be determined based on the predefinition, the value preconfiguration, or the network device configuration. Alternatively, a parameter that is not determined based on the predefinition, the value preconfiguration, or the network device configuration may be indicated by using indication information. For example, the index of the start time unit of the first PSFCH resource is determined based on the predefinition, the value preconfiguration, or the network device configuration, and the quantity of time units occupied by the first PSFCH resource is determined based on the indication information. Alternatively, the quantity of time units occupied by the first PSFCH resource is determined based on the predefinition, the value preconfiguration, or the network device configuration, and the index of the start time unit of the first PSFCH resource is determined based on the indication information.

2. PSFCH frequency domain resource

In a possible implementation, an index of a start frequency domain unit of the first PSFCH resource and/or a quantity of frequency domain units occupied by the first PSFCH resource may be determined based on predefinition, value preconfiguration, or network device configuration.

For example, the predefinition or the value preconfiguration is preconfigured at both of the transmit terminal or the receive terminal, and the network device configuration may carry resource configuration information in downlink control information (downlink control information, DCI), radio resource control (radio resource control, RRC) signaling, or a system information block (system information block, SIB), to indicate the index of the start frequency domain unit of the first PSFCH resource and/or the quantity of frequency domain units occupied by the first PSFCH resource.

In another possible implementation, optionally, the method 200 includes step 231: The first terminal sends fourth indication information to the second terminal, where the fourth indication information indicates the index of the start frequency domain unit of the first PSFCH resource and/or the quantity of frequency domain units occupied by the first PSFCH resource. Correspondingly, the second terminal receives the fourth indication information.

For example, in the foregoing two possible implementations, the frequency domain unit may be a subchannel or an RB, where the RB may be based on an interlace (interlace) structure or a non-interlace structure, and an interlaced resource block is a newly introduced resource allocation type of the interlace structure in an unlicensed communication system. For detailed descriptions, refer to descriptions in conventional technologies. Details are not described herein again. The non-interlace structure represents RBs arranged in a natural order.

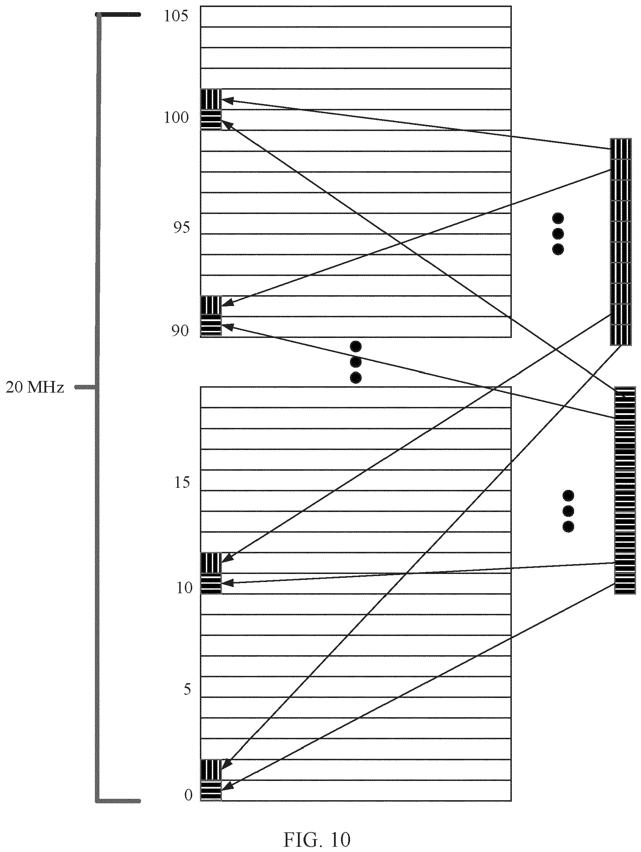

For example, FIG. 10 is a schematic diagram of a frequency domain resource obtained by a first terminal. A bandwidth of the frequency domain resource is 20 megahertz (MHz), and includes 10 interlaced resource blocks. As shown in FIG. 10, horizontal stripe resources in the figure form one interlaced resource block. To be specific, the horizontal stripe resource whose indices are {0,10,20,30,40,50,60,70,80,90,100} form the one interlaced resource block. Vertical stripe resources form another interlaced resource block. To be specific, the vertical stripe resources whose indices are f 1,11, 21, 31, 41, 51, 61, 71, 81, 91,101; form the another interlaced resource block. Each interlaced resource block may be used by one terminal to transmit data. For example, the interlaced resource block formed by the horizontal stripe resources in the figure may be used by one terminal device to transmit data, and the interlaced resource block formed by the vertical stripe resources in the figure may be used by another terminal device to transmit data.

It should be noted that, herein, that the frequency domain resource of the 20 MHz bandwidth shown in FIG. 10 includes 10 interlaced resource blocks is merely an example, and the frequency domain resource may include another quantity of interlaced resource blocks, for example, five. This is not limited in embodiments of this application.

The frequency domain resource of the first PSFCH resource may be determined based on an index of a start subchannel or an RB index in a time unit in which the first PSFCH resource is located and a quantity of subchannels or RBs occupied by the first PSFCH resource. Data that is not fed back within the COT 2 may correspond to a plurality of receive terminals. In this case, the COT 1 may include a plurality of PSFCH resources, that is, a PSFCH resource set. The PSFCH resource set is a set of PSFCH resources in the time unit in which the first PSFCH resource is located. The PSFCH resource set includes the first PSFCH resource, where the first PSFCH resource is used by the second terminal to feed back the first HARQ information, and the second terminal is one of a plurality of receive ends. It should be understood that another PSFCH resource in the PSFCH resource set other than the first PSFCH resource is used by another receive terminal to feed back HARQ information.

Optionally, a frequency domain resource of a PSFCH resource in the PSFCH resource set may be determined based on at least one of a bitmap (bitmap), a start PSFCH resource of the PSFCH resource set, and a gap. The gap is a frequency domain unit gap between neighboring PSFCH resources in the PSFCH resource set.

For example, the time unit in which the first PSFCH resource is located includes N frequency domain units, and a frequency domain unit that belongs to the PSFCH resource set may be determined from the N frequency domain units based on the bitmap. For example, N bits indicate frequency domain units that are in the N frequency domain units and that belong to the PSFCH resource set. Specifically, when N=10, the N bits may be 1100011000, that is, the PSFCH resource set includes first, second, sixth, and seventh frequency units in the 10 frequency units. Alternatively, a frequency domain unit position of each PSFCH resource in the PSFCH resource set may be determined based on a frequency domain unit position of the start PSFCH resource and/or a frequency domain unit gap.

Optionally, the bitmap, the frequency domain position of the start PSFCH resource or the frequency domain unit gap may be predefined, or may be a preconfigured value, or may be configured by the network device. Similarly, the network device may perform configuration by using DCI, RRC, or SIB information.

In still another possible implementation, the index of the start frequency domain unit of the first P SFCH resource or the quantity of frequency domain units occupied by the first PSFCH resource may be determined based on predefinition, value preconfiguration, or network device configuration. Alternatively, a parameter that is not determined based on the predefinition, the value preconfiguration, or the network device configuration may be indicated by using indication information. For example, the index of the start frequency domain unit of the first PSFCH resource is determined based on the predefinition, the value preconfiguration, or the network device configuration, and the quantity of frequency domain units occupied by the first PSFCH resource is determined based on the indication information. Alternatively, the quantity of frequency domain units occupied by the first PSFCH resource is determined based on the predefinition, the value preconfiguration, or the network device configuration, and the index of the start frequency domain unit of the first PSFCH resource is determined based on the indication information.

Optionally, the frequency domain resource of the first PSFCH resource (for example, the index of the start frequency domain unit of the first PSFCH resource) is determined based on a time domain position of the first data within the second channel occupancy time.

For example, regardless of being predefined, preconfigured, or indicated by the indication information, the index of the start frequency domain unit of the first PSFCH resource may be an index of an absolute position, or may be an index of a relative position. The index of the absolute position indicates that the index of the start frequency domain unit of the first PSFCH resource is an index of a frequency domain unit included in a time unit in which the first PSFCH resource is located. For example, the time unit in which the first PSFCH resource is located includes 10 subchannels in total. The index of the start frequency domain unit of the first PSFCH resource is 3, that is, the start frequency domain unit of the first PSFCH resource is a subchannel whose index is 3. The index of the relative position indicates that the index of the start frequency domain unit of the first PSFCH resource is an index of a frequency domain unit in which a PSFCH resource in the PSFCH resource set is located. For example, the time unit in which the first PSFCH resource is located includes 10 subchannels in total. The PSFCH resource occupies five subchannels, and the index of the start frequency domain unit of the first PSFCH resource is 3, that is, the start frequency domain unit of the first PSFCH resource is a subchannel whose index is 3 in the five subchannels that are occupied by the PSFCH resource.

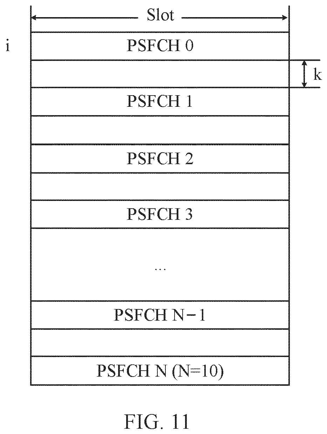

FIG. 11 is a schematic diagram of a frequency domain position of a PSFCH resource according to an embodiment of this application.

As shown in FIG. 11, a quantity N of PSFCH resources included in a time unit in which a PSFCH resource set is located is equal to 10, and an RB or a subchannel i in which a start PSFCH resource PSFCH 0 is located is equal to 1. A gap k between two PSFCH resources is equal to 1 RB or subchannel.

According to national and regional regulatory requirements for using an unlicensed frequency band, a 5 GHz frequency band is used as an example, and a 20 MHz channel is accessed. A channel can be occupied when at least a minimum occupied channel bandwidth (occupied channel bandwidth, OCB) requirement is met. Generally, the minimum OCB is at least 80% of a normal bandwidth. 20 MHz is used as an example. At least 16 MHz bandwidth needs to be occupied to preempt the 20 MHz channel. To meet the requirement of the OCB, all receive ends may send unified HARQ information on a common PSFCH resource. A position of the common PSFCH resource may be predefined, a preconfigured value, or configured by a network device (configuration carried by DCI or RRC or SIB information). For example, common PSFCH resources may be a first (PSFCH 0) and a last (PSFCH N) of the N PSFCH resources.

Optionally, the index of the start frequency domain unit of the first PSFCH resource is determined based on the time domain position of the first data within the second channel occupancy time.

It should be understood that a correspondence between the index of the frequency domain unit and the time domain position of the first data within the second channel occupancy time may be used in a solution of determining the first PSFCH resource based on the predefinition, the preconfiguration, or the like, and may also be used in a solution of determining the first PSFCH resource based on the indication information.

For example, receive ends of data transmitted within the COT 2 includes the UE-1, the UE-2, and the UE-3. In this case, indexes of PSFCH resources occupied by HARQ information fed back by the UE-1, the UE-2, and the UE-3 may be determined based on a time-domain order of the data transmitted within the COT 2. The order may be a forward order, or may be a reverse order. This is not limited in this application. As shown in FIG. 8, no HARQ information is fed back on the data carried in the slots 7, 8, and 9, and the receive ends of the data carried in the slots 7, 8, and 9 are respectively the UE-1, the UE-2, and the UE-3 based on a time-domain forward order. Therefore, an index of the PSFCH resource that corresponds to the receive end UE-1 is 1, an index of the PSFCH resource that corresponds to the receive end UE-2 is 2, and an index of the PSFCH resource that corresponds to the receive end UE-3 is 3. On the contrary, if the receive ends of the data carried in the slots 7, 8, and 9 are sorted in a time-domain reverse order, indexes of PSFCH resources that correspond to the receive end UE-1, the receive end UE-2, and the receive end UE-3 are respectively 3, 2, and 1.

3. PSFCH code domain resource

When the PSFCH is sent by using a sequence, the code domain resource is sequence cyclic phase offset, and specifically includes $m_0$ and $m_{cs}$. A PSFCH sequence may be generated based on a ZC (Zadoff-Chu) sequence with a low peak-to-average ratio. The PSFCH sequence occupies one or more consecutive orthogonal OFDM symbols in time domain, and may be one or more resource blocks in frequency domain.

Specifically, a manner of generating the PSFCH sequence is as follows:

First, a basic sequence $r(n)$ may be generated according to a sequence length, where $0 \leq n \leq M_{ZC}$, and then phase rotation is performed on the basic sequence $r(n)$ to obtain a low peak-to-average ratio sequence that is multiplexable, where the low peak-to-average ratio sequence meets formula (1).

$$r^{\alpha_l}(n) = r(n) * e^{j\alpha_l n}, \; 0 \leq n \leq M_{ZC} \; (1)$$

In formula (1), $M_{ZC}$=12, $l$ represents a number of an OFDM symbol in a PSFCH transmission slot, for example, $l$=0 represents a first OFDM symbol in a current PSFCH transmission slot, and $\alpha_l$ represents a phase rotation value. In other words, different phase rotation values of $\alpha l$ may be used to generate different PSFCH sequences, and each PSFCH sequence may be code-division multiplexed on a physical resource block (physical resource block, PRB) for sending. Because the second terminal needs to feed back ACK/NACK information, at least two sequences need to be allocated to each terminal, and these sequences respectively correspond to $\alpha l$ of different values, where the phase rotation value $\alpha l$ may meet formula (2).

$$\alpha_l = \frac{2\pi}{N_{sc}^{PRB}}\left(\left(m_0 + m_{cs} + n_{cs}(n_{s,f}^{\mu}, l+l')\right) \bmod N_{sc}^{PRB}\right), \; 0 \leq n \leq M_{ZC} \; (2)$$

In formula (2), $N_{sc}^{PRB}$ represents a quantity of subcarriers in one PRB. In an NR system, a value of $N_{sc}^{PRB}$ may be 12. mod () represents modulo, and $n_{s,f}^{\mu}$ represents a number of an SL transmission slot corresponding to a current subcarrier gap μ in a radio frame. *l'* indicates a symbol index relative to the first OFDM symbol in the current PSFCH transmission slot. A function $n_{cs}(n_{s,f}^{\mu},l)$ may meet the following formula (3):

$$n_{cs}(n_{s,f}^{\mu},l) = \sum_{m=0}^{7} 2^m c(8N_{symb}^{slot}n_{s,f}^{\mu} + 8l + m) \quad (3)$$

$N_{symb}^{slot}$ represents a quantity of consecutive time domain symbols in one SL transmission slot. In the NR system, a value of $N_{symb}^{slot}$ may be 14, and m is an integer whose value ranges from 0 to 7. *c(i)* represents a numerical value of a sequence number *i* in a pseudo-random sequence. An initial value for generating the pseudo-random sequence is $c_{init} = n_{ID}$, and $n_{ID}$ is configured by a higher layer. If the higher layer does not configure $n_{ID}$, $n_{ID} = 0$.

A pseudo-random sequence *c(n)* whose length is $M_{PN}$ may be generated by cyclic shift of a gold sequence whose length is 31, where $n = 0,1,..., M_{PN}-1$, and the gold sequence is two m-sequences $x_1(n)$ and $x_2(n)$. A generation process of *c(n)* is as follows:

$$c(n) = \left(x_1\left(n + N_c\right) + x_2\left(n + N_c\right)\right) \bmod 2$$

$$x_1\left(k + 31\right) = \left(x_1\left(k + 3\right) + x_1\left(k\right)\right) \bmod 2$$

$$x_2\left(k + 31\right) = \left(x_2\left(k + 3\right) + x_2\left(k + 2\right) + x_2\left(k + 1\right) + x_2\left(k\right)\right) \bmod 2$$

where $N_c = 1600$, $x_1(0)=1$, $x_1(n)=0$, $n=1,2,\cdots,30$, and $x_2(n)$ may be determined by $c_{init} = \sum_{i=0}^{30} x_2(i) \cdot 2^i$.

$m_0$ indicates an initial phase of a PSFCH resource pair, and $m_{cs}$ indicates offset that is of an ACK/NACK sequence in the PSFCH resource pair and that is relative to the initial phase. One PSFCH resource pair may be used for HARQ feedback, where one sequence may be used for feeding back an ACK, and the other sequence may be used for feeding back a NACK. A value of $m_0$ may be related to a quantity of sequence pairs on a same PSFCH time-frequency resource. As shown in Table 1, $N_{CS}^{PSFCH}$ indicates a quantity of sequence pairs on a PSFCH time-frequency resource. For example, when $N_{CS}^{PSFCH}=1$, $m_0=0$, and when $N_{CS}^{PSFCH}=6$, there are six values for mo: 0, 1, 2, 3, 4, and 5. A value of $m_{cs}$ may be shown in Table 2 or Table 3.

**Table 1**

| $N_{CS}^{PSFCH}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 4 | 0 | 2 | 4 | - | - | - |
| 6 | 0 | 1 | 2 | 3 | 4 | 5 |

**Table 2**

| HARQ-ACK value | 0 (NACK) | 1 (ACK) |
|---|---|---|
| Sequence cyclic shift | $m_{cs}=0$ | $m_{cs}=6$ |

**Table 3**

| HARQ-ACK value | 0 (ACK) | 1 (NACK) |
|---|---|---|
| Sequence cyclic shift | $m_{cs}=0$ | $m_{cs}=6$ |

When all PSFCH sequences are code-division multiplexed on one physical resource block, a quantity of sequence pairs that can be carried on a same physical resource block further needs to be considered for the index of the PSFCH resource. For example, the PSFCH resource set occupies one symbol in time domain, occupies ten physical resource blocks in frequency domain, and each physical resource block has six sequence pairs. That is, the PSFCH resource set includes 60 PSFCH resources.

Optionally, when the PSFCH resource is determined based on an implicit rule (predefinition or preconfiguration), a time domain, a frequency domain, and a code domain need to be considered in a process of sorting the PSFCH resources. As shown in FIG. 8, the data (corresponding to the UE-1, the UE-2, and the UE-3) that is not fed back within the COT 2 is sorted in the time-domain forward order or in the time-domain reverse order. If the PSFCH resource set occupies one symbol in time domain and one physical resource block in frequency domain, and each physical resource block has three sequence pairs, that is, the PSFCH resource set includes three PSFCH resources, where one PSFCH resource corresponds to one sequence pair. If the receive ends of the data carried in the slots 7, 8, and 9 are sorted in the time-domain forward order, the index of the PSFCH resource that corresponds to the receive end UE-1 is 1, the index of the PSFCH resource that corresponds to the receive end UE-2 is 2, and the index of the PSFCH resource that corresponds to the receive end UE-3 is 3. On the contrary, if the receive ends of the data carried in the slots 7, 8, and 9 are sorted in the time-domain reverse order, the indexes of PSFCH resources that correspond to the receive end UE-1, the receive end UE-2, and the receive end UE-3 are respectively 3, 2, and 1.

Optionally, when the PSFCH resource is explicitly indicated by the indication information, the sequence cyclic phase offset, that is, $m_0$ and $m_{cs}$, needs to be indicated in the indication information.

According to the method 200, when the first terminal obtains the COT 2 by using the LBT mechanism, in a process in which the first terminal transmits data on a resource that corresponds to the COT 2, because feedback information of some data is not fed back within the COT 2, the first terminal obtains the COT 1 again by using the LBT mechanism and indicates, by using the first indication information, the second terminal that the COT 1 includes the first PSFCH resource, so that the second terminal feeds back the first HARQ information on the first PSFCH resource.

It should be understood that after receiving the first indication information, the second terminal may determine the first PSFCH resource based on the predefinition or information preconfigured by the network device, to determine a specific resource (a time domain resource, a frequency domain resource, or a code domain resource) of the first PSFCH resource, and send the first HARQ information on the first PSFCH resource.

Alternatively, after receiving the first indication information, the second terminal determines a specific resource of the first PSFCH resource with reference to the third indication information and/or the fourth indication information, and sends the first HARQ information on the first PSFCH resource.

Alternatively, after receiving the first indication information, the second terminal may determine a specific resource of the first PSFCH resource by using a combination of the predefinition, the preconfiguration by the network device, and the indication information, and send the first HARQ information on the first PSFCH resource. The time domain resource is determined in a manner of predefinition and preconfiguration, and the frequency domain resource is determined based on the indication information; or the frequency domain resource is determined in a manner of predefinition and preconfiguration, and the time domain resource is determined based on the indication information. This is not limited in this application. Alternatively, some time domain parameters (the index of the start time unit or the quantity of the occupied time units) may be determined in the manner of predefinition or preconfiguration. Other time domain parameters and frequency domain resources that are not predefined or preconfigured are indicated by using the indication information. Alternatively, some frequency domain parameters (the index of the start frequency domain unit, or the quantity of the occupied frequency domain units) may be determined in the manner of predefinition or preconfiguration. Other frequency domain parameters and time domain resources that are not predefined or preconfigured are indicated by using the indication information. This is not limited in this application.

When there is a plurality of pieces of data that is not fed back within the COT 2, the second terminal further needs to determine, based on the second indication information, which piece of data within the COT 2 needs to be fed back.

The method 200 may further be: After obtaining the COT 1 again by using the LBT mechanism, the first terminal directly indicates a specific resource (a time domain resource, a frequency domain resource, or a code domain resource) of the first PSFCH resource to the second terminal by using the third indication information and/or the fourth indication information, so that the second terminal feeds back the first HARQ information on the first PSFCH resource. In other words, the first terminal may skip sending the first indication information to notify the second terminal that the COT 1 includes the first PSFCH resource, but directly indicate, by using the third indication information and/or the fourth indication information, a resource position of the first PSFCH resource. Therefore, after receiving the third indication information and/or the fourth indication information, the second terminal sends the first HARQ information at the resource position that is indicated by the first terminal.

Alternatively, after obtaining the COT 1 again by using the LBT mechanism, the first terminal may skip sending the first indication information to notify the second terminal that the COT 1 includes the first PSFCH resource, but indicate the resource that corresponds to the COT 1 to the second terminal by using the indication information. After receiving the indication information, the second terminal may determine, based on a predefined rule, the first PSFCH resource that is used to send the first HARQ information.

For example, the second terminal may determine a time domain position N in which the first data is located, so that the second terminal can determine to send the first HARQ information at a time domain position N+K. A frequency domain resource occupied by the first HARQ information may be determined by using the foregoing method for determining the frequency domain resource of the first PSFCH resource.

Alternatively, after obtaining the COT 1 again by using the LBT mechanism, the first terminal indicates, to the second terminal by using the indication information, the resource that corresponds to the COT 1 (optionally, sends the first indication information to indicate the second terminal that the COT 1 includes the first PSFCH resource), and indicates the specific resource (the time domain resource, the frequency domain resource, and the code domain resource) of the first PSFCH resource by using the third indication information and/or the fourth indication information, so that the second terminal feeds back the first HARQ information on the first PSFCH resource.

It should be understood that, in a process in which the third indication information indicates the time domain resource of the first PSFCH resource, all time domain resource parameters (the index of the start time unit and the quantity of the occupied time units) may be indicated, or a part of the time domain resource parameters (the index of the start time unit or the quantity of the occupied time units) may be indicated. A time domain resource parameter that is not indicated by the third indication information is determined in the manner of predefinition or preconfiguration. Similarly, in a process in which the fourth indication information indicates the frequency domain resource of the first PSFCH resource, all frequency domain resource parameters (the index of the start frequency domain unit and the quantity of the occupied frequency domain units) may be indicated, or a part of the frequency domain resource parameters (the index of the start frequency domain unit or the quantity of the occupied frequency domain units) may be indicated. A frequency domain resource parameter that is not indicated by the fourth indication information is determined in the manner of predefinition or preconfiguration.

Optionally, at least one of the first indication information, the second indication information, the third indication information, and the fourth indication information is carried in the SCI, and the first terminal sends the SCI to the second terminal within the COT 1.

It should be further understood that the third indication information and the fourth indication information may separately indicate the time domain resource and the frequency domain resource of the first PSFCH resource. In other words, the third indication information indicates the time domain resource of the first PSFCH resource by using one field, and the fourth indication information indicates the frequency domain resource of the first PSFCH resource by using another field. In addition, the third indication information and the fourth indication information may alternatively indicate the time domain resource and the frequency domain resource of the first PSFCH resource by using a same field. This is not limited in this application.

Based on the foregoing solution, after the data transmit end (the first terminal) preempts, based on the LBT mechanism, the resource that corresponds to the first channel occupancy time, the second terminal sends the feedback information on the resource preempted by the first terminal. Compared with a solution in which the second terminal contends for a resource to send the feedback information, this solution can reduce a possibility of a contention failure of the second terminal, and improve accuracy of data transmission.

The foregoing describes a method in which the first terminal obtains the COT 1 again by using the LBT mechanism, and the COT 1 is used by the second terminal to feed back the first HARQ information. In addition, in addition to being used by the second terminal to feed back the first HARQ information, the COT 1 is further used to transmit data. The following describes an embodiment in which the COT 1 is used to feed back the first HARQ information and is also used to transmit data.

In addition to feeding back the first HARQ information, the first PSFCH resource in the method 200 is further used to feed back the second HARQ information, and the second HARQ information is used to feed back second data. The second data is data sent by the first terminal to the second terminal within the first channel occupancy time (COT 1).

It should be understood that a manner of determining a specific resource (a time domain resource, a frequency domain resource, and a code domain resource) of the first PSFCH resource in this embodiment is the same as that described in the foregoing steps in the method 200. Details are not described herein again.

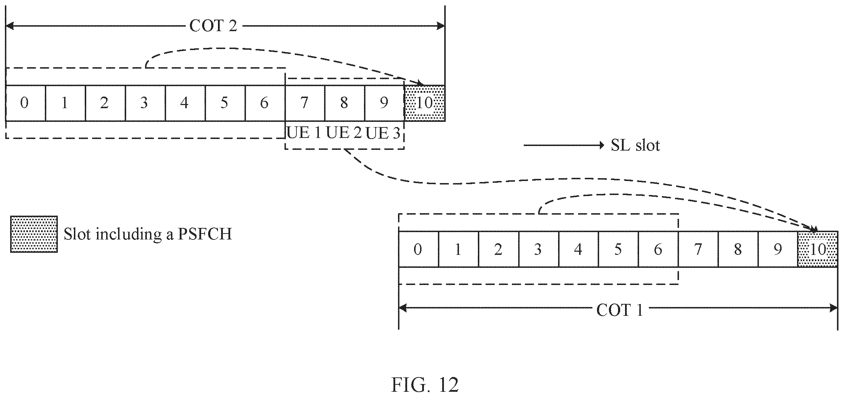

FIG. 12 is a schematic diagram of transmitting data and HARQ information by a first terminal and a second terminal within COT 1 according to an embodiment of this application.

After successfully contending for a channel, the first terminal obtains the second channel occupancy time COT 2. It is assumed that the COT 2 includes ten slots, and first terminal may perform PSSCH transmission on different receive terminals in the ten slots. HARQ information that corresponds to first seven slots may be fed back within the COT 2, and a PSFCH resource that corresponds to the HARQ information may be located in a last slot within the COT 2. However, due to a factor such as a decoding processing delay of a PSCCH, HARQ information that corresponds to the receive end UE-1, the receive end UE-2, and the receive end UE-3 in the slots 7, 8, and 9 that are close to an end of the COT 2 cannot be fed back within the COT 2. The first terminal needs to additionally perform LBT to contend for a channel for the PSFCH resources that correspond to the slots 7, 8, and 9. The first terminal performs LBT again and successfully obtains new first channel occupancy time COT 1.

As shown in FIG. 12, the first seven slots in the COT 1 are used to transmit data. The data may be data sent by the first terminal to different receive terminals, and the receive terminals may include the second terminal. Alternatively, the data may be different data sent by the first terminal to a same receive terminal. If data sent in a slot 0 to a slot 6 includes second data sent by the first terminal to the second terminal, a first PSFCH resource included in a resource that corresponds to the COT 1 is used to send first HARQ information and second HARQ information. The second HARQ information is a feedback on the second data (a data receive end is the second terminal) transmitted in the first seven slots in the COT 1, and a PSFCH resource that is other than the first PSFCH resource and that is included in resources that corresponds to the COT 1 is used to feed back HARQ information that corresponds to data received by another receive terminal (a receive terminal other than the second terminal) within the COT 1 and the COT 2. If the data sent in the slot 0 to the slot 6 does not include the second data sent by the first terminal to the second terminal, the PSFCH resource (a PSFCH resource set in a slot 10) included in the resources that correspond to the COT 1 is used to feed back HARQ information that corresponds to data received by the UE 1, the UE 2, and the UE 3 within the COT 1, and HARQ information that corresponds data (that is, data sent in the slot 0 to the slot 6) received by another receive terminal (a receive terminal other than the second terminal) within the COT 2.

It should be understood that a slot is used as an example of a time unit in FIG. 12, and the time unit certainly may alternatively be a symbol or another time unit. Details are not described herein in this application.

Optionally, indication information used to indicate the first PSFCH resource may be carried in a ninth slot in the COT 1. This is merely an example and is not limited in embodiments of this application.

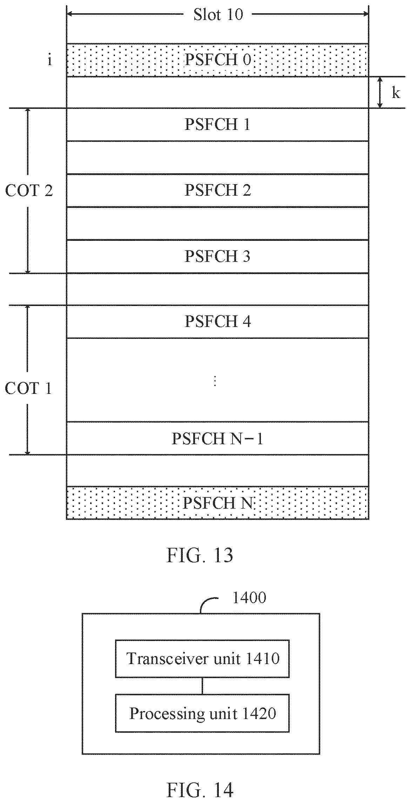

A tenth slot in the COT 1 in FIG. 12 is used to transmit the PSFCH resource, and specific distribution of PSFCH resources in the slot may be shown in FIG. 13. A PSFCH resource set in the slot includes N PSFCH resources, and some PSFCH resources (for example, a PSFCH 1, a PSFCH 2, and a PSFCH 3) are used to feed back HARQ information that corresponds to data transmitted within the COT 2. The HARQ information includes the first HARQ information. Some PSFCH resources (for example, a PSFCH 4 to a PSFCH N-1) are used to feed back HARQ information that corresponds to data transmitted within the COT 1, and the HARQ information includes the second HARQ information. A position of a common PSFCH resource may be predefined, a preconfigured value, or configured by a network device (indication/-configuration carried by DCI or RRC or SIB information). For example, common PSFCH resources may be a first (PSFCH 1) and a last (PSFCH N) of the N PSFCH resources.

It should be understood that the PSFCH resource shown in FIG. 13 used to feed back the data transmitted within the COT 1 and a relative position of the PSFCH resource that corresponds to the data transmitted within the COT 2 are merely examples. This is not limited in this application. In addition, a relative position of each PSFCH resource in the PSFCH resource set is related to a time domain position of data that corresponds to the PSFCH resource and that are within the COT 1 or the COT 2, and is specifically related to a forward order or a reverse order. This is not limited in this application.

In this embodiment, there are a plurality of pieces of data corresponding to the HARQ information that is fed back in the PSFCH resource set, and both the data transmitted within the COT 1 and the data transmitted within the COT 2 are included, in this case, indication information may be used to indicate information about the data to a receive terminal, for example, a PSSCH source identifier and/or destination identifier, so that the receive terminal determines, based on the PSSCH source identifier and/or destination identifier, which piece of data needs to be fed back.

It should be understood that, different from step 220, the data that corresponds to the PSSCH source identifier and/or destination identifier indicated by the indication information may be within the COT 1, or may be within the COT 2. However, the data that corresponds to the PSSCH source identifier and destination identifier indicated by the second indication information in step 220 is within the COT 2.

Based on the foregoing solution, the first terminal may preempt, by using the LBT mechanism, the resource that corresponds to the first channel occupancy time, to transmit data and feedback information. In this solution, the first terminal preempts a resource to transmit data, and the first terminal may receive, on the preempted resource, the HARQ information that corresponds to the data for which the HARQ information is not previously fed back within the second channel occupancy time. This overcomes a defect that data within the second channel occupancy time in some scenarios is not fed back within the second channel occupancy time, and improves a feedback mechanism in a data transmission process.

It should be understood that the steps shown in dotted lines in the foregoing flowchart 7 are optional steps, and a sequence of the steps is determined based on an internal logic of the method. A sequence number shown in FIG. 7 is merely an example, and does not limit this application.

It should be further understood that the methods provided in embodiments of this application may be used independently, or may be used together. This is not limited in this application.

It should be noted that the execution body shown in FIG. 7 is merely an example, and the execution body may alternatively be a chip, a chip system, or a processor that supports the execution body in implementing the method shown in FIG. 7. This is not limited in this application.

The foregoing describes the method embodiments in embodiments of this application with reference to the accompanying drawings, and the following describes apparatus embodiments in embodiments of this application. It can be understood that the description of the method embodiments and the description of the apparatus embodiment may correspond to each other. Therefore, for a part that is not described, refer to the foregoing method embodiments.

It may be understood that, in the foregoing method embodiments, a method and an operation implemented by a transmit terminal (the first terminal is used as an example) or a receive terminal (the second terminal is used as an example) may alternatively be implemented by a component (for example, a chip or a circuit) that can be used by the transmit terminal or the receive terminal.

The foregoing mainly describes the solutions provided in embodiments of this application from a perspective of interaction between devices. It may be understood that, to implement the foregoing functions, each device element, for example, a transmit end device or a receive end device, includes a corresponding hardware structure and/or a corresponding software module for performing each function. A person skilled in the art should be aware that, in combination with the examples described in embodiments disclosed in this specification, units, algorithms, and steps may be implemented by hardware or a combination of hardware and computer software in this application. Whether a function is performed in a manner of hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, the transmit end device or the receive end device may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that the module division in embodiments of this application is an example, and is merely logical function division. In actual implementation, there may be another division manner. An example in which each functional module is obtained through division based on each corresponding function is used below for description.

FIG. 14 is a schematic block diagram of a communication apparatus according to an embodiment of this application. A communication apparatus 1400 includes a transceiver unit 1410 and a processing unit 1420. The transceiver unit 1410 may communicate with the outside, and the processing unit 1420 is configured to perform data processing. The transceiver unit 1410 may also be referred to as a communication interface or a communication unit.

Optionally, the communication apparatus 1400 may further include a storage unit. The storage unit may be configured to store instructions and/or data, and the processing unit 1420 may read the instructions and/or data in the storage unit.

In one case, the communication apparatus 1400 may be a first terminal, the transceiver unit 1410 is configured to perform a receiving or transmitting operation of the first terminal in the foregoing method embodiments, and the processing unit 1420 is configured to perform an internal processing operation of the first terminal in the foregoing method embodiments.

In a design, the transceiver unit 1410 is configured to send first indication information to a second terminal, where the first indication information indicates that first channel occupancy time includes a first physical sidelink feedback channel PSFCH resource; and the transceiver unit 1410 is further configured to receive, on the first PSFCH resource, feedback information from the second terminal.

Alternatively, in another design, the transceiver unit 1410 is configured to send first indication information to a second terminal, where the first indication information indicates a resource that corresponds to first channel occupancy time; and the transceiver unit 1410 is further configured to receive, on the resource that corresponds to the first channel occupancy time, feedback information from the second terminal.

The transceiver unit 1410 is specifically configured to receive, on the first PSFCH resource, first hybrid automatic repeat request HARQ information from the second terminal, where the first HARQ information is a feedback on first data, and the first data is data sent by the first terminal to the second terminal within second channel occupancy time. The first channel occupancy time is later than the second channel occupancy time.

Based on the foregoing solution, after preempting, based on an LBT mechanism, the resource that corresponds to the first channel occupancy time, a data transmit end (the first terminal) indicates the resource that corresponds to the first channel occupancy time or indicates that the first channel occupancy time includes the first PSFCH resource to the second terminal (a data receive end). In this way, the second terminal sends the feedback information on the resource that is indicated and that corresponds to the first channel occupancy time or on the first PSFCH resource determined by using a predefined rule. Compared with a solution in which the second terminal contends for a resource to send the feedback information, this solution can reduce a possibility of a contention failure of the second terminal, and improve accuracy of data transmission.

Further, the transceiver unit 1410 is specifically configured to receive, on the first PSFCH resource, the first HARQ information and second HARQ information from the second terminal. The first HARQ information is the feedback on the first data, and the first data is the data sent by the first terminal to the second terminal within the second channel occupancy time. The second HARQ information is a feedback on second data, and the second data is data sent by the first terminal to the second terminal within the first channel occupancy time.

In a possible implementation, the transceiver unit 1410 is further configured to send second indication information to the second terminal, where the second indication information indicates information about the first data that corresponds to the first HARQ information.

In a possible implementation, the information about the first data includes a first PSSCH source identifier and/or destination identifier.

In a possible implementation, the processing unit 1420 is configured to determine a time domain resource of the first PSFCH resource based on an index of a start time unit of the first PSFCH resource and/or a quantity of time units occupied by the first PSFCH resource.

In a possible implementation, the transceiver unit 1410 is further configured to send third indication information to the second terminal, where the third indication information indicates the index of the start time unit of the first PSFCH resource and/or the quantity of time units occupied by the first PSFCH resource.

In a possible implementation, the processing unit 1420 is further configured to determine a frequency domain resource of the first PSFCH resource based on an index of a start frequency domain unit of the first PSFCH resource and/or a quantity of frequency domain units occupied by the first PSFCH resource.

In a possible implementation, the transceiver unit 1410 is further configured to send fourth indication information to the second terminal, where the fourth indication information indicates the index of the start frequency domain unit of the first PSFCH resource and/or the quantity of frequency domain units occupied by the first PSFCH resource.

In a possible implementation, the processing unit 1420 is further configured to determine the frequency domain resource of the first PSFCH resource based on a time domain position of the first data within the second channel occupancy time.

In a possible implementation, the index of the start frequency domain unit of the first PSFCH resource is an index of a frequency domain unit included in a time unit in which the first PSFCH resource is located.

In a possible implementation, the index of the start frequency domain unit of the first PSFCH resource is an index of a frequency domain unit in which a PSFCH resource in a PSFCH resource set is located, and the PSFCH resource set is a set of PSFCH resources in a time unit in which the first PSFCH resource is located; and a frequency domain resource of the PSFCH resource in the PSFCH resource set is determined based on at least one of a bitmap, a start PSFCH resource of the PSFCH resource set, and a gap, where the gap is a frequency domain unit gap between neighboring PSFCH resources in the PSFCH resource set.

In a possible implementation, the bitmap, the start PSFCH resource of the PSFCH resource set, and the gap may be determined in a manner of predefinition, preconfiguration, or network device configuration.

In a possible implementation, at least one of the first indication information, the second indication information, the third indication information, and the fourth indication information is carried in sidelink control information SCI, and the SCI is transmitted within the first channel occupancy time.

Optionally, the communication apparatus 1400 may be a component configured in the first terminal, for example, a chip in the first terminal.

In this case, the transceiver unit 1410 may be an interface circuit, a pin, or the like. Specifically, the interface circuit may include an input circuit and an output circuit, and the processing unit 1420 may include a processing circuit.

Optionally, the transceiver unit 1410 may further be a radio frequency module. The processing unit 1420 may be a baseband module. The radio frequency module is mainly configured to send or receive a radio frequency signal and perform conversion between the radio frequency signal and a baseband signal. The baseband module is mainly used for baseband processing and base station control.

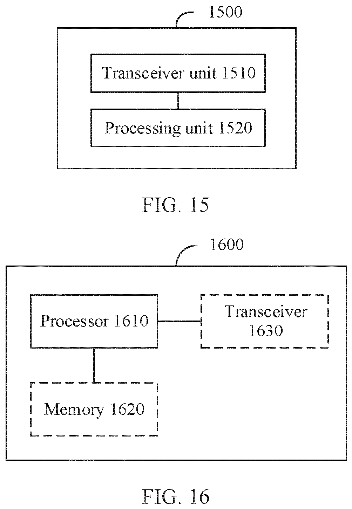

FIG. 15 is a schematic block diagram of a communication apparatus according to an embodiment of this application. A communication apparatus 1500 includes a transceiver unit 1510 and a processing unit 1520. The transceiver unit 1510 may communicate with the outside, and the processing unit 1520 is configured to perform data processing. The transceiver unit 1510 may also be referred to as a communication interface or a communication unit.

Optionally, the communication apparatus 1500 may further include a storage unit. The storage unit may be configured to store instructions and/or data, and the processing unit 1520 may read the instructions and/or data in the storage unit.

In another case, the communication apparatus 1500 is a second terminal, the transceiver unit 1510 is configured to perform a receiving or transmitting operation of the second terminal in the foregoing method embodiments, and the processing unit 1520 is configured to perform an internal processing operation of the second terminal in the foregoing method embodiments.

In a design, the transceiver unit 1510 is configured to receive first indication information from a first terminal, where the first indication information indicates that first channel occupancy time includes a first PSFCH resource; and the transceiver unit 1510 is further configured to send, on the first PSFCH resource, feedback information to the first terminal.

Alternatively, in another design, the transceiver unit 1510 is configured to receive first indication information from a first terminal, where the first indication information indicates a resource that corresponds to first channel occupancy time; and the transceiver unit 1510 is further configured to send, on the resource that corresponds to the first channel occupancy time, feedback information to the first terminal.

Based on the foregoing solution, after preempting, based on an LBT mechanism, the resource that corresponds to the first channel occupancy time, a data transmit end (the first terminal) indicates the resource that corresponds to the first channel occupancy time or indicates that the first channel occupancy time includes the first PSFCH resource to the second terminal (a data receive end). In this way, the second terminal sends the feedback information on the resource that is indicated and that corresponds to the first channel occupancy time or on the first PSFCH resource determined by using a predefined rule. Compared with a solution in which the second terminal contends for a resource to send the feedback information, this solution can reduce a possibility of a contention failure of the second terminal, and improve accuracy of data transmission.

Further, the transceiver unit 1510 is specifically configured to send, on the first PSFCH resource, first HARQ information to the first terminal, where the first HARQ information is a feedback on first data, and the first data is data received by the second terminal from the first terminal within second channel occupancy time. The first channel occupancy time is later than the second channel occupancy time.

Additionally, the transceiver unit 1510 is specifically configured to send, on the first PSFCH resource, the first HARQ information and second HARQ information to the first terminal. The first HARQ information is the feedback on the first data, and the first data is data received by the second terminal from the first terminal within the second channel occupancy time. The second HARQ information is a feedback on second data, and the second data is data received by the second terminal from the first terminal within the first channel occupancy time.

In a possible implementation, the transceiver unit 1510 is further configured to receive second indication information from the first terminal, where the second indication information indicates information about the first data that corresponds to the first HARQ information. The processing unit is configured to control, based on the second indication information, the transceiver unit to send, on the first PSFCH resource, the first HARQ information to the first terminal.

In a possible implementation, the information about the first data includes a PSSCH source identifier and/or destination identifier. The processing unit 1520 is specifically configured to determine the first data based on the PSSCH source identifier and/or destination identifier, and controls the transceiver unit 1510 to send, on the first PSFCH resource, the first HARQ information that corresponds to the first data to the first terminal.

In a possible implementation, the processing unit 1520 is further configured to determine a time domain resource of the first PSFCH resource based on an index of a start time unit of the first PSFCH resource and/or a quantity of time units occupied by the first PSFCH resource.

In a possible implementation, the transceiver unit 1510 is further configured to receive third indication information from the first terminal, where the third indication information indicates the index of the start time unit of the first PSFCH resource and/or the quantity of time units occupied by the first PSFCH resource.

In a possible implementation, the processing unit 1520 is further configured to determine a frequency domain resource of the first PSFCH resource based on an index of a start frequency domain unit of the first PSFCH resource and/or a quantity of frequency domain units occupied by the first PSFCH resource.

In a possible implementation, the transceiver unit 1510 is further configured to receive fourth indication information from the first terminal, where the fourth indication information indicates the index of the start frequency domain unit of the first PSFCH resource and/or the quantity of frequency domain units occupied by the first PSFCH resource.

In a possible implementation, the processing unit 1520 is further configured to determine the frequency domain resource of the first PSFCH resource based on a time domain position of the first data within the second channel occupancy time.

In a possible implementation, the index of the start frequency domain unit of the first PSFCH resource is an index of a frequency domain unit included in a time unit in which the first PSFCH resource is located.

In a possible implementation, the index of the start frequency domain unit of the first PSFCH resource is an index of a frequency domain unit in which a PSFCH resource in a PSFCH resource set is located, and the PSFCH resource set is a set of PSFCH resources in a time unit in which the first PSFCH resource is located; and a frequency domain resource of the PSFCH resource in the PSFCH resource set is determined based on at least one of a bitmap, a start PSFCH resource of the PSFCH resource set, and a gap, where the gap is a frequency domain unit gap between neighboring PSFCH resources in the PSFCH resource set.

In a possible implementation, the bitmap, the start PSFCH resource of the PSFCH resource set, and the gap may be determined in a manner of predefinition, preconfiguration, or network device configuration.

In a possible implementation, at least one of the first indication information, the second indication information, the third indication information, and the fourth indication information is carried in SCI, and the SCI is transmitted within the first channel occupancy time.

Optionally, the communication apparatus 1500 may be a component configured in the second terminal, for example, a chip in the second terminal.

In this case, the transceiver unit 1510 may be an interface circuit, a pin, or the like. Specifically, the interface circuit may include an input circuit and an output circuit, and the processing unit 1520 may include a processing circuit.

Optionally, the transceiver unit 1510 may further be a radio frequency module. The processing unit 1520 may be a baseband module. The radio frequency module is mainly configured to send or receive a radio frequency signal and perform conversion between the radio frequency signal and a baseband signal. The baseband module is mainly used for baseband processing and base station control.

FIG. 16 is a schematic diagram of a structure of a terminal device according to an embodiment of this application.

A terminal device 1600 may be applicable to a system shown in FIG. 1(a), 1(b), or 1(c). The terminal device 1600 is the first terminal or the second terminal in the method implementations. For ease of description, FIG. 16 shows only main components of the terminal device 1600. As shown in FIG. 16, the terminal device 1600 includes a processor, a memory, a control circuit, an antenna, and an input/output apparatus. A transceiver unit 1630 is configured to perform a receiving or transmitting operation of the first terminal or the second terminal in the foregoing method embodiments, and a processing unit 1610 is configured to perform an internal processing operation of the first terminal or the second terminal in the foregoing method embodiments.

The processor is mainly configured to: process a communication protocol and communication data, control the entire terminal device 1600, execute a software program, and process data of the software program. The memory is mainly configured to store the software program and data. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus such as a touchscreen, a display, a microphone, or a keyboard is mainly configured to receive data input by a user and output data to the user.

That the terminal device 1600 is a mobile phone is used as an example. After the terminal device 1600 is powered on, the processor may read the software program in the storage unit, interpret and execute instructions of the software program, and process data of the software program. When data needs to be sent wirelessly, the processor performs baseband processing on the to-be-sent data, and then outputs the baseband signal to the control circuit. The control circuit performs radio frequency processing on the baseband signal, and then sends the radio frequency signal to the outside in the form of the electromagnetic wave through the antenna. When data is sent to the terminal device 1600, the control circuit receives the radio frequency signal through the antenna, converts the radio frequency signal into the baseband signal, and outputs the baseband signal to the processor. The processor converts the baseband signal into data and processes the data.

A person skilled in the art may understand that, for ease of description, FIG. 16 shows only one processor 1610, one memory 1620, and one transceiver 1630 (a dotted box indicates that the transceiver is optional). In some embodiments, the terminal device 1600 may include a plurality of processors and memories. The memory may also be referred to as a storage medium, a storage device, or the like. This is not limited in embodiments of the present invention.

In an optional implementation, the processor may include a baseband processor and a central processing unit. The baseband processor is mainly configured to process the communication protocol and the communication data. The central processing unit is mainly configured to control the entire terminal device 1600, execute the software program, and process the data of the software program. The processor in FIG. 16 integrates functions of the baseband processor and the central processing unit. A person skilled in the art may understand that the baseband processor and the central processing unit may alternatively be independent processors and are interconnected by using a technology such as a bus. The terminal device 1600 may include a plurality of baseband processors to adapt to different network standards. The terminal device 1600 may include a plurality of central processing units to enhance a processing capability of the terminal device 1600. Components of the terminal device 1600 may be connected by using various buses. The baseband processor may also be represented as a baseband processing circuit or a baseband processing chip. The central processing unit may also be represented as a central processing circuit or a central processing chip. A function of processing the communication protocol and the communication data may be built in the processor, or may be stored in the storage unit in a form of a software program, and the processor executes the software program to implement a baseband processing function.

In an example, an antenna and a control circuit having a transceiver function may be considered as a transceiver unit of the terminal device 1600, and a processor having a processing function may be considered as a processing unit of the terminal device 1600. The transceiver unit may also be referred to as a transceiver device, a transceiver, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes a receiving unit and a sending unit. For example, the receiving unit may also be referred to as a receiver, a receiver device, a receiving circuit, or the like, and the sending unit may be referred to as a transmitter, a transmitter device, a transmitting circuit, or the like.

An embodiment of this application further provides a computer-readable storage medium. The computer readable storage medium stores computer instructions that are used to implement the methods performed by the first terminal or the second terminal in the foregoing method embodiments.

For example, when the computer program is executed by a computer, the computer is enabled to implement the methods performed by the first terminal or the second terminal in the foregoing method embodiments.

An embodiment of this application further provides a computer program product including instructions. When the instructions are executed by a computer, the computer is enabled to implement the methods performed by the first terminal or the second terminal in the foregoing method embodiments.

An embodiment of this application further provides a communication system. The communication system includes the first terminal and the second terminal in the foregoing embodiments. Optionally, the communication system includes the first terminal and a plurality of second terminals.

For explanations and beneficial effects of related content of any of the communication apparatuses provided above, refer to the corresponding method embodiment provided above. Details are not described herein again.

In embodiments of this application, the first terminal or the second terminal may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as main memory). An operating system of the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant communication software.

A specific structure of an execution body of the method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by a first terminal or a second terminal, or a function module that is in the first terminal or the second terminal and that can invoke and execute a program.

The terms "component", "module", and "system" and the like used in this specification indicate a computer-related entity, hardware, firmware, a combination of hardware and software, software, or software being executed. For example, a component may be but is not limited to a process, a processor, an object, an executable file, an execution thread, a program, and/or a computer running on a processor. As illustrated by using figures, both a computing device and an application that runs on the computing device may be components. One or more components may reside within the process and/or the execution thread, and the component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

It should be further understood that "first", "second", and various numbers in this specification are merely used for differentiation for ease of description, and are not construed as a limitation to the scope of embodiments of this application.

It should be understood that the term "and/or" in this specification describes only an association relationship between associated objects and represents that three relationships may exist. For example, A and/or B may represent the following three cases: Only A exists, both A and B exist, and only B exists.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the apparatus embodiments described above are merely examples. For example, the unit division is merely logical function division. The units described as separate parts may or may not be physically separate, and parts shown as units may or may not be physical units, that is, may be located in one place, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing computer-readable storage medium may be any available medium that can be accessed by the computer. For example, the computer-readable medium may include but is not limited to a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disk storage, a magnetic disk storage medium, another magnetic storage device, or any other medium that can carry or store expected program code in a form of instructions or a data structure and that can be accessed by the computer. In addition, by way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Therefore, the protection scope of embodiments of this application shall be subject to the protection scope of the claims.

## Claims

1. A sidelink feedback information transmission method, comprising:

   sending (S210), by a first terminal, first indication information to a second terminal, wherein the first indication information indicates that first channel occupancy time comprises a first physical sidelink feedback channel, PSFCH, resource; and
   receiving (S240), by the first terminal on the first PSFCH resource, first hybrid automatic repeat request, HARQ, information and second HARQ information from the second terminal, wherein the first HARQ information is a feedback on first data, the first data is data sent by the first terminal to the second terminal within second channel occupancy time, the first channel occupancy time is later than the second channel occupancy time, and the second HARQ information is a feedback on second data, and the second data is data sent by the first terminal to the second terminal within the first channel occupancy time.

2. The method according to claim 1, wherein the method further comprises:
   sending (S220), by the first terminal, second indication information to the second terminal, wherein the second indication information indicates information about the first data that corresponds to the first HARQ information.

3. The method according to claim 2, wherein the information about the first data comprises a physical sidelink shared channel, PSSCH source identifier and/or destination identifier.

4. The method according to claim 3, wherein a time domain resource of the first PSFCH resource is determined based on an index of a start time unit of the first PSFCH resource and/or a quantity of time units occupied by the first PSFCH resource.

5. The method according to claim 4, wherein the method further comprises:
sending (S230), by the first terminal, third indication information to the second terminal, wherein the third indication information indicates the index of the start time unit of the first PSFCH resource and/or the quantity of time units occupied by the first PSFCH resource.

6. A sidelink feedback information transmission method, comprising:

receiving (S210), by a second terminal, first indication information from a first terminal, wherein the first indication information indicates that first channel occupancy time comprises a first physical sidelink feedback channel, PSFCH, resource; and
sending (S240), by the second terminal on the first PSFCH resource, first hybrid automatic repeat request, HARQ, information and second HARQ information to the first terminal, wherein the first HARQ information is a feedback on first data, the first data is data received by the second terminal from the first terminal within second channel occupancy time, the first channel occupancy time is later than the second channel occupancy time, and the second HARQ information is a feedback on second data, and the second data is data received by the second terminal from the first terminal within the first channel occupancy time.

7. The method according to claim 6, wherein the method further comprises:

receiving (S220), by the second terminal, second indication information from the first terminal, wherein the second indication information indicates information about the first data that corresponds to the first HARQ information; and
the sending, by the second terminal on the first PSFCH resource, first hybrid automatic repeat request, HARQ information to the first terminal comprises:
sending, by the second terminal on the first PSFCH resource, the first HARQ information to the first terminal based on the second indication information.

8. The method according to claim 7, wherein the information about the first data comprises a physical sidelink shared channel, PSSCH source identifier and/or destination identifier.

9. The method according to claim 8, wherein a time domain resource of the first PSFCH resource is determined based on an index of a start time unit of the first PSFCH resource and/or a quantity of time units occupied by the first PSFCH resource.

10. The method according to claim 9, wherein the method further comprises:
receiving (S230), by the second terminal, third indication information from the first terminal, wherein the third indication information indicates the index of the start time unit of the first PSFCH resource and/or the quantity of time units occupied by the first PSFCH resource.

11. A communication apparatus (1600), comprising a processor (1610) and a memory (1620), wherein the memory (1620) is configured to store one or more computer programs, and when the one or more computer programs are run by the processor (1610), the method according to any one of claims 1 to 5 is performed by the processor (1610).

12. A communication apparatus (1600), comprising a processor (1610) and a memory (1620), wherein the memory (1620) is configured to store one or more computer programs, and when the one or more computer programs are run by the processor (1610), the method according to any one of claims 6 to 10 is performed by the processor (1610).

13. A computer-readable storage medium comprising instructions which, when executed by a processor of an apparatus, cause the apparatus to carry out the method according to any one of claims 1 to 5.

14. A computer-readable storage medium comprising instructions which, when executed by a processor of an apparatus, cause the apparatus to carry out the method according to any one of claims 6 to 10.

**Patentansprüche**

1. Verfahren zur Übertragung von Sidelink-Feedbackinformationen, umfassend:

   Senden (S210), durch ein erstes Endgerät, von ersten Angabeinformationen an ein zweites Endgerät, wobei die ersten Angabeinformationen angeben, dass die erste Kanalbelegungszeit eine Ressource eines ersten physikalischen Sidelink-Feedbackkanals, PSFCH-Ressource, umfasst; und
   Empfangen (S240), durch das erste Endgerät auf der ersten PSFCH-Ressource, von ersten Informationen zu einer hybriden automatischen Wiederholungsanforderung, HARQ-Informationen, und zweiten HARQ-Informationen von dem zweiten Endgerät, wobei die ersten HARQ-Informationen ein Feedback zu ersten Daten sind, die ersten Daten Daten sind, die innerhalb einer zweiten Kanalbelegungszeit durch das erste Endgerät an das zweite Endgerät gesendet werden, die erste Kanalbelegungszeit später als die zweite Kanalbelegungszeit ist, und die zweiten HARQ-Informationen ein Feedback zu zweiten Daten sind und die zweiten Daten Daten sind, die innerhalb der ersten Kanalbelegungszeit durch das erste Endgerät an das zweite Endgerät gesendet werden.

2. Verfahren nach Anspruch 1, wobei das Verfahren ferner Folgendes umfasst:
   Senden (S220), durch das erste Endgerät, von zweiten Angabeinformationen an das zweite Endgerät, wobei die zweiten Angabeinformationen Informationen über die ersten Daten angeben, die den ersten HARQ-Informationen entsprechen.

3. Verfahren nach Anspruch 2, wobei die Informationen über die ersten Daten eine Quellenkennung und/oder eine Zielkennung eines gemeinsam genutzten physischen Sidelink-Kanals, PSSCH-Quellenkennung und/oder -Zielkennung, umfassen.

4. Verfahren nach Anspruch 3, wobei eine Zeitbereichsressource der ersten PSFCH-Ressource basierend auf einem Index einer Startzeiteinheit der ersten PSFCH-Ressource und/oder einer Menge von Zeiteinheiten, die durch die erste PSFCH-Ressource belegt sind, bestimmt wird.

5. Verfahren nach Anspruch 4, wobei das Verfahren ferner Folgendes umfasst:
   Senden (S230), durch das erste Endgerät, von dritten Angabeinformationen an das zweite Endgerät, wobei die dritten Angabeinformationen den Index der Startzeiteinheit der ersten PSFCH-Ressource und/oder die Menge von Zeiteinheiten, die durch die erste PSFCH-Ressource belegt sind, angeben.

6. Verfahren zur Übertragung von Sidelink-Feedbackinformationen, umfassend:

   Empfangen (S210), durch ein zweites Endgerät, von ersten Angabeinformationen von einem ersten Endgerät, wobei die ersten Angabeinformationen angeben, dass die erste Kanalbelegungszeit eine Ressource eines ersten physischen Sidelink-Feedbackkanals, PSFCH-Ressource, umfasst; und
   Senden (S240), durch das zweite Endgerät auf der ersten PSFCH-Ressource, von ersten Informationen zu einer hybriden automatischen Wiederholungsanforderung, HARQ-Informationen, und zweiten HARQ-Informationen an das erste Endgerät, wobei die ersten HARQ-Informationen ein Feedback zu ersten Daten sind, die ersten Daten Daten sind, die innerhalb einer zweiten Kanalbelegungszeit durch das zweite Endgerät von dem ersten Endgerät empfangen werden, die erste Kanalbelegungszeit später als die zweite Kanalbelegungszeit ist, und die zweiten HARQ-Informationen ein Feedback zu zweiten Daten sind und die zweiten Daten Daten sind, die innerhalb der ersten Kanalbelegungszeit durch das zweite Endgerät von dem ersten Endgerät empfangen werden.

7. Verfahren nach Anspruch 6, wobei das Verfahren ferner Folgendes umfasst:

   Empfangen (S220), durch das zweite Endgerät, von zweiten Angabeinformationen von dem ersten Endgerät, wobei die zweiten Angabeinformationen Informationen über die ersten Daten angeben, die den ersten HARQ-Informationen entsprechen; und
   das Senden, durch das zweite Endgerät auf der ersten PSFCH-Ressource, von ersten Informationen zu einer hybriden automatischen Wiederholungsanforderung, HARQ-Informationen, an das erste Endgerät Folgendes umfasst:
   Senden, durch das zweite Endgerät auf der ersten PSFCH-Ressource, der ersten HARQ-Informationen an das erste Endgerät basierend auf den zweiten Angabeinformationen.

**8.** Verfahren nach Anspruch 7, wobei die Informationen über die ersten Daten eine Quellenkennung und/oder eine Zielkennung eines gemeinsam genutzten physischen Sidelink-Kanals, PSSCH-Quellenkennung und/oder -Zielkennung, umfassen.

**9.** Verfahren nach Anspruch 8, wobei eine Zeitbereichsressource der ersten PSFCH-Ressource basierend auf einem Index einer Startzeiteinheit der ersten PSFCH-Ressource und/oder einer Menge von Zeiteinheiten, die durch die erste PSFCH-Ressource belegt sind, bestimmt wird.

**10.** Verfahren nach Anspruch 9, wobei das Verfahren ferner Folgendes umfasst:
Empfangen (S230), durch das zweite Endgerät, von dritten Angabeinformationen von dem ersten Endgerät, wobei die dritten Angabeinformationen den Index der Startzeiteinheit der ersten PSFCH-Ressource und/oder die Menge von Zeiteinheiten, die durch die erste PSFCH-Ressource belegt sind, angeben.

**11.** Kommunikationsvorrichtung (1600), umfassend einen Prozessor (1610) und einen Speicher (1620), wobei der Speicher (1620) dazu konfiguriert ist, ein oder mehrere Computerprogramme zu speichern, und wenn das eine oder die mehreren Computerprogramme durch den Prozessor (1610) ausgeführt werden, das Verfahren nach einem der Ansprüche 1 bis 5 durch den Prozessor (1610) durchgeführt wird.

**12.** Kommunikationsvorrichtung (1600), umfassend einen Prozessor (1610) und einen Speicher (1620), wobei der Speicher (1620) dazu konfiguriert ist, ein oder mehrere Computerprogramme zu speichern, und wenn das eine oder die mehreren Computerprogramme durch den Prozessor (1610) ausgeführt werden, das Verfahren nach einem der Ansprüche 6 bis 10 durch den Prozessor (1610) durchgeführt wird.

**13.** Computerlesbares Speichermedium, umfassend Anweisungen, die, wenn sie durch einen Prozessor einer Vorrichtung ausgeführt werden, die Vorrichtung dazu veranlassen, das Verfahren nach einem der Ansprüche 1 bis 5 auszuführen.

**14.** Computerlesbares Speichermedium, umfassend Anweisungen, die, wenn sie durch einen Prozessor einer Vorrichtung ausgeführt werden, die Vorrichtung dazu veranlassen, das Verfahren nach einem der Ansprüche 6 bis 10 auszuführen.


**Revendications**

**1.** Procédé de transmission d'informations de rétroaction de liaison latérale, comprenant :

l'envoi (S210), par un premier terminal, de premières informations d'indication à un second terminal, dans lequel les premières informations d'indication indiquent que le premier temps d'occupation de canal comprend une première ressource de canal physique de rétroaction de liaison latérale, PSFCH ; et
la réception (S240), par le premier terminal sur la première ressource PSFCH, de premières informations de demande de répétition automatique hybride, HARQ, et de secondes informations HARQ provenant du second terminal, dans lequel les premières informations HARQ sont une rétroaction sur des premières données, les premières données sont des données envoyées par le premier terminal au second terminal pendant un second temps d'occupation de canal, le premier temps d'occupation de canal est postérieur au second temps d'occupation de canal, et les secondes informations HARQ sont une rétroaction sur des secondes données, et les secondes données sont des données envoyées par le premier terminal au second terminal pendant le premier temps d'occupation de canal.

**2.** Procédé selon la revendication 1, dans lequel le procédé comprend également :
l'envoi (S220), par le premier terminal, de secondes informations d'indication au second terminal, dans lequel les secondes informations d'indication indiquent des informations sur les premières données qui correspondent aux premières informations HARQ.

**3.** Procédé selon la revendication 2, dans lequel les informations sur les premières données comprennent un identifiant de source de canal physique partagé de liaison latérale, PSSCH, et/ou un identifiant de destination.

**4.** Procédé selon la revendication 3, dans lequel une ressource de domaine temporel de la première ressource PSFCH est déterminée sur la base d'un indice d'une unité de temps de début de la première ressource PSFCH et/ou d'une quantité d'unités de temps occupées par la première ressource PSFCH.

5. Procédé selon la revendication 4, dans lequel le procédé comprend également :
l'envoi (S230), par le premier terminal, de troisièmes informations d'indication au second terminal, dans lequel les troisièmes informations d'indication indiquent l'indice de l'unité de temps de début de la première ressource PSFCH et/ou la quantité d'unités de temps occupées par la première ressource PSFCH.

6. Procédé de transmission d'informations de rétroaction de liaison latérale, comprenant :

la réception (S210), par un second terminal, de premières informations d'indication provenant d'un premier terminal, dans lequel les premières informations d'indication indiquent que le premier temps d'occupation de canal comprend une première ressource de canal physique de rétroaction de liaison latérale, PSFCH ; et
l'envoi (S240), par le second terminal sur la première ressource PSFCH, de premières informations de demande de répétition automatique hybride, HARQ, et de secondes informations HARQ au premier terminal, dans lequel les premières informations HARQ sont une rétroaction sur des premières données, les premières données sont des données reçues par le second terminal provenant du premier terminal pendant un second temps d'occupation de canal, le premier temps d'occupation de canal est postérieur au second temps d'occupation de canal, et les secondes informations HARQ sont une rétroaction sur des secondes données, et les secondes données sont des données reçues par le second terminal provenant du premier terminal pendant le premier temps d'occupation de canal.

7. Procédé selon la revendication 6, dans lequel le procédé comprend également :

la réception (S220), par le second terminal, de secondes informations d'indication provenant du premier terminal, dans lequel les secondes informations d'indication indiquent des informations sur les premières données qui correspondent aux premières informations HARQ ; et
l'envoi, par le second terminal sur la première ressource PSFCH, de premières informations de demande de répétition automatique hybride, HARQ, au premier terminal comprend :
l'envoi, par le second terminal sur la première ressource PSFCH, des premières informations HARQ au premier terminal sur la base des secondes informations d'indication.

8. Procédé selon la revendication 7, dans lequel les informations sur les premières données comprennent un identifiant de source de canal physique partagé de liaison latérale, PSSCH, et/ou un identifiant de destination.

9. Procédé selon la revendication 8, dans lequel une ressource de domaine temporel de la première ressource PSFCH est déterminée sur la base d'un indice d'une unité de temps de début de la première ressource PSFCH et/ou d'une quantité d'unités de temps occupées par la première ressource PSFCH.

10. Procédé selon la revendication 9, dans lequel le procédé comprend également :
la réception (S230), par le second terminal, de troisièmes informations d'indication provenant du premier terminal, dans lequel les troisièmes informations d'indication indiquent l'indice de l'unité de temps de début de la première ressource PSFCH et/ou la quantité d'unités de temps occupées par la première ressource PSFCH.

11. Appareil de communication (1600), comprenant un processeur (1610) et une mémoire (1620), dans lequel la mémoire (1620) est configurée pour stocker un ou plusieurs programmes informatiques, et lorsque les un ou plusieurs programmes informatiques sont exécutés par le processeur (1610), le procédé selon l'une quelconque des revendications 1 à 5 est réalisé par le processeur (1610).

12. Appareil de communication (1600), comprenant un processeur (1610) et une mémoire (1620), dans lequel la mémoire (1620) est configurée pour stocker un ou plusieurs programmes informatiques, et lorsque les un ou plusieurs programmes informatiques sont exécutés par le processeur (1610), le procédé selon l'une quelconque des revendications 6 à 10 est réalisé par le processeur (1610).

13. Support de stockage lisible par ordinateur comprenant des instructions qui, lorsqu'elles sont exécutées par un processeur d'un appareil, amènent l'appareil à mettre en oeuvre le procédé selon l'une quelconque des revendications 1 à 5.

14. Support de stockage lisible par ordinateur comprenant des instructions qui, lorsqu'elles sont exécutées par un processeur d'un appareil, amènent l'appareil à mettre en oeuvre le procédé selon l'une quelconque des revendications 6 à 10.

FIG. 1(a)

FIG. 1(b)

FIG. 1(c)

FIG. 2

FIG. 3

FIG. 4

FIG. 5

EP 4 351 055 B1

FIG. 6

EP 4 351 055 B1

200

```
┌─────────────────┐                              ┌─────────────────┐
│  First terminal │                              │ Second terminal │
└─────────────────┘                              └─────────────────┘
        │                                                  │
        │────── S210: First indication information ───────▶│
        │                                                  │
        │─ ─ ─ S220: Second indication information ─ ─ ─ ─▶│
        │                                                  │
        │─ ─ ─ S230: Third indication information ─ ─ ─ ─ ▶│
        │                                                  │
        │─ ─ ─ S231: Fourth indication information ─ ─ ─ ─▶│
        │                                                  │
        │◀───── S240: Feedback information ────────────────│
        │                                                  │
```

FIG. 7

FIG. 8

FIG. 9

FIG. 10

FIG. 11

FIG. 12

FIG. 13

FIG. 14

1500

| Transceiver unit 1510 |
| Processing unit 1520 |

FIG. 15

1600

| Processor 1610 | Transceiver 1630 |
| Memory 1620 | |

FIG. 16

**EP 4 351 055 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110736163
- US 20211092783 A1
- CA 3150398 A1